# EUROPEAN PATENT APPLICATION

(11) **EP 0 548 550 A2**
(43) Date of publication of application: **30.06.1993**
(21) Application number: 92119816.4
(22) Date of filing: 20.11.1992
(51) Int. Cl.: G06F 15/16, G06F 13/18, G06F 15/20

(54) **Application specific integrated circuit for shared memory controller**

(30) Priority: 22.11.1991 US 797530
(71) Applicant: PITNEY BOWES INC., Stamford Connecticut 06926-0700 (US)
(72) Inventor: Kudish-Parkos, Maria P., Milford, CT 06460 (US)
(74) Representative: Ritter und Edler von Fischern, Bernhard,Dipl.-Ing.

(57) **Abstract**

A shared memory controller application specific integrated circuit (10) is disclosed that arbitrates microprocessor access priorities to shared volatile memory. This circuit provides efficient microprocessor to microprocessor communication, while allowing a microprocessor to maintain real-time control of motion apparatus.

## Description

This invention relates to integrated circuits for controllers in article processing systems, particularly for controllers in those processing systems that control a plurality of motors and sensors, as well as other system functions.

In a type of processing system such as a mailing machine, articles such as items of mail are passed sequentially through a series of motor-driven stations. Sensors monitor the passage of articles through each station, as well as the functioning of each station. As real-time control of the motors is often essential, one system configuration involves a dedicated motor-controller microprocessor. Likewise, a microprocessor may be dedicated to sensor control and another to system control. With this arrangement, rapid microprocessor-to-microprocessor communication must be provided without negatively affecting the essential motor control subsystem. Further, system cost must be maintained at a low level, despite the use of a multiple processor environment.

In view of the foregoing, it would be desirable to be able to provide a low cost integrated circuit that provides the necessary control for rapid microprocessor-to-microprocessor communication in a multiple processor control system.

It would further be desirable to be able to provide means for multiple microprocessors to communicate via shared memory.

It would still further be desirable to be able to provide a shared memory controller integrated circuit that contains microprocessor interfaces and means for arbitrating priorities among multiple microprocessors for access to shared memory.

It would also be desirable to provide a shared memory controller circuit that allows reduction in the complexity of at least one of the microprocessors required in a multiprocessor, shared memory, article processing system environment, and that provides high quality and reliability.

### Summary of the Invention

In view of the foregoing, it is an object of the invention to provide in a multiple processor system, a low cost integrated circuit that provides the necessary control for rapid microprocessor-to-microprocessor communication.

In accordance with the invention, a circuit is provided with interfaces to microprocessor-based controllers, and with means for controlling processor access to shared memory, so as to provide communication between controllers.

In further accordance with this invention, an integrated circuit is provided with arbitration means for controlling priority between multiple microprocessor-based controllers, so that in an article processing system, real-time motor-controller performance is maintained.

In still further accordance with this invention, an integrated circuit is provided that decouples the sensor bus controller interface to shared memory by providing temporary storage so that a lower-cost fixed-cycle microprocessor may be used for this controller.

In accordance with a yet further aspect of the invention, an integrated circuit is provided that is cost effective and provides a high performance communications medium, allowing maximum software flexibility with little overhead to administer link and protocol level mechanisms.

In accordance with a yet still further aspect of the invention, a shared memory controller is provided for providing control for rapid processor-to-processor communication in a multiple processor system with a motion controller, a sensor bus controller, a system controller, and shared volatile memory by means of an arbitration unit for determining access priorities to the shared volatile memory, a motion controller interface unit for allowing communication between the arbitration unit and the motor controller, a sensor bus controller unit for allowing communication between the arbitration unit and the sensor bus controller, and a system interface unit for allowing communication between the arbitration unit and the system controller.

### Brief Description of the Drawings

The above and other object and advantages of this invention will be apparent upon consideration of the following detailed description, taken in conjunction with the accompanying drawings in which like reference characters refer to like parts throughout, and in which:
FIG. 1 is a functional block diagram showing the system environment of the shared memory controller;
FIG. 2 is a functional block diagram of the shared memory controller integrated circuit;
FIG. 3 is a pin diagram of the shared memory controller;
FIGS. 4a-e show the peripheral pads and buffers of the shared memory controller;
FIG. 5 is a pin diagram of the shared memory controller less the peripheral buffers;
FIGS 6a-c show the interconnections between modules of the shared memory controller less the peripheral buffers;
FIG. 7 is a timing diagram showing the operations of the HOLD_RDY signal;
FIG. 8 is a timing diagram for the system interface module;
FIG. 9 is a pin diagram of the system interface module;
FIG. 10 is a schematic diagram of the system interface circuit;
FIG. 11 is a pin diagram of the system module DFF_8_SCAN;
FIG. 12 is a schematic diagram of the circuit implementation of the module DFF_8_SCAN;
FIG. 13 is a pin diagram of the module DFF_NEG_SCAN;
FIG. 14 is a schematic diagram of the DFF_NEG_SCAN module circuit;
FIG. 15 is a pin diagram of the DFF_SCAN module;
FIG. 16 is a schematic diagram of the DFF_SCAN circuit;
FIG. 17 is a pin diagram of the SR_SCAN module;
FIG. 18 is a schematic diagram of the SR_SCAN circuit;
FIG. 19 is a timing diagram showing typical system controller memory read and write cycles;
FIG. 20 is a pin diagram of the motor controller interface module;
FIG. 21 is a schematic diagram of the motor controller interface circuit;
FIG. 22 is a timing diagram showing the operation of the HOLD_RDY signal;
FIG. 23 is a logical block diagram showing the sensor bus controller interface module, memory interface module, and peripheral buffers;
FIG. 24 is a pin diagram of the sensor bus controller interface module;
FIG. 25 is a schematic diagram of the sensor bus controller interface circuit;
FIG. 26 is a pin diagram of the DFFRMP_SCAN module;
FIG. 27 is a schematic diagram of the DFFRMP_SCAN circuit;
FIG. 28 is a pin diagram of the module LATCH8M;
FIG. 29 is a schematic diagram of the circuit implementation of the LATCH8M module;
FIG. 30 is a pin diagram of the module LAT8;
FIG. 31 is a schematic diagram of the circuit implementation of the LAT8 module;
FIG. 32 is a timing diagram of sensor bus controller interface memory read and write events;
FIG. 33 is a worst-case timing diagram for memory signals in a motor controller access;
FIG. 34 is a pin diagram of the memory interface module;
FIG. 35 is a schematic diagram of the memory interface circuit;
FIG. 36 is a functional block diagram of the watchdog unit;
FIG. 37 is a diagram of the ALE detect state machine;
FIG. 38 is a pin diagram of the watch dog module;
FIG. 39 is a schematic diagram of the watchdog module circuitry and module;
FIG. 40 is a pin diagram of the WDOG_SNQ module;
FIG. 41 is a schematic diagram of the WDOG_SNQ module circuit;
FIG. 42 is a pin diagram of the CNT18 module;
FIG. 43 is a schematic diagram of the CNT18 circuit;
FIG. 44 is a pin diagram of the CLK_RST module;
FIG. 45 is a schematic diagram of the CLK_RST module circuit;
FIG. 46 is a pin diagram of the A2D_CLK module;
FIG. 47 is a schematic diagram of the A2D_CLK module circuit;
FIG. 48 is a state machine diagram of the shared memory controller arbitration unit;
FIG. 49 is a pin diagram of the arbitration module;
FIG. 50 is a schematic diagram of the arbitration unit module;
FIG. 51 is a pin diagram of the NIFT_SIGS module;
FIG. 52 is a schematic diagram of the NIFT_SIGS module circuit;
FIG. 53 is a pin diagram of the NIFT_SNQ module;
FIG. 54 is a schematic diagram of the NIFT_SNQ module circuit;
FIG. 55 is a pin diagram of the NIFT_SNQ module;
FIG. 56 is a schematic diagram of the NIFT_STSN module circuit;
FIG. 57 is a pin diagram of the INV8X3 module; and
FIG. 58 is a schematic diagram of the INV8X3 module circuit.

### Detailed Description of the Invention

In an article processing system, such as a mailing machine, articles, such as items of mail, must be rapidly manipulated by a series of motor driven components. Typical components include feeders, stacking machines, folders, and envelope stuffers. As items of mail pass sequentially through the system, real-time control can often best be achieved by dedicating a microprocessor to the motion control function. Other system tasks such as sensing motor shaft positions and velocities or interfacing with the user may also be efficiently accomplished by allocating specialized microprocessors for each task.

To tie a system of multiple processors together, a communication scheme that is responsive to the individual requirements of each processor's function is required. For example, in a mailing machine many motors must be driven under real-time control. Other functions, such as monitoring motor status, may be occasionally interrupted, while the user interface might be used only intermittently (for example, to allow the input of commands via keyboard). One efficient system architecture employs volatile memory with shared access as a means of providing rapid inter-processor communications. Integral to this arrangement is a controller that interfaces with the various processors and arbitrates access priorities to the shared memory. The circuit of the present invention provides such a controller.

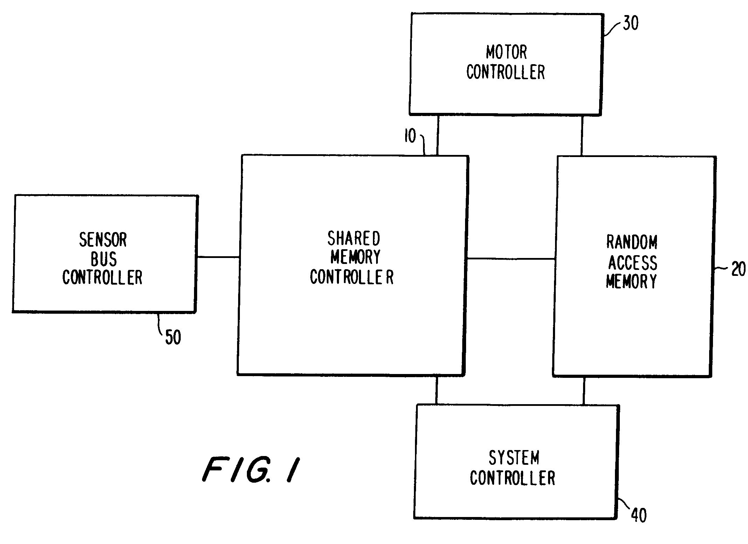

Referring to FIG. 1, there is shown an overview of the operating environment of shared memory controller 10. The invention is described herein below as operating in an environment of specific microprocessors and peripheral devices. However, it will be understood that other microprocessors or devices could be used with only minor modification to the invention.

In an article processing system, shared memory controller application specific integrated circuit 10 allows three core board microprocessor-based controllers to share single random access memory 20. The microprocessors involved are motor controller 30, which preferably may be an 80C196 motion control processor available from Intel Corporation of Santa Clara, California; system controller 40, which preferably may be an 80C188 processor available from Intel Corporation; and sensor bus controller 50, which preferably may be an Intel 80C51 available from Intel Corporation. Individual controllers have dedicated control tasks, but must also communicate from controller to controller. This inter-controller communication capability may be provided in several ways, but in accordance with the present invention is provided via the access of all controllers to shared memory 20. One important function of shared memory controller 10 is to arbitrate access priorities between controllers. Shared memory controller 10 provides this arbitration in a manner that is sensitive to the performance needs of an article processing system.

The processing demands of the article processing system can be characterized as "real-time" in nature. Motor controller 30 is the most critical element affecting system performance. However, all elements are interrelated and are performance-sensitive as well. The software design of motor controller 10 is modeled after a synchronous finite state machine. If all tasks assigned to a particular "slice" in time are not completed in the prescribed period of time the system may enter a failure mode. All loading estimates are therefore calculated using worst-case times. For these reasons, the arbitration scheme of shared memory controller 10 optimizes the latency of motor controller 30 and the access time to shared memory 20, while one of the other processors in system 100 is completing a memory access cycle.

The arbitration function of shared memory controller 10 allows motor controller 30 to access shared memory 20 asynchronously for maximum performance. The other controllers are only granted access to shared memory 20 when motor controller 30 starts a cycle that does not access shared memory 20. This assures that motor controller 30 receives immediate access to shared memory 30 when necessary; and that the other system controller's memory access will overlap during non-memory-access cycles of controller 30.

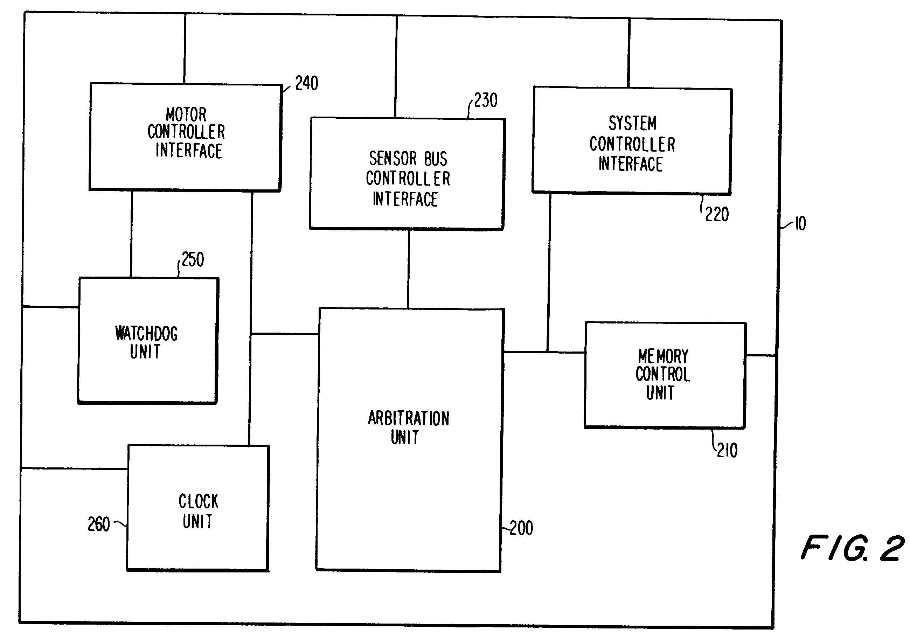

FIG. 2 shows a diagram of shared memory controller 10 that details functional blocks of the circuit. Motor controller interface 240, sensor bus controller 230, and system controller interface 220 provide interface capabilities, while arbitration unit 200 determines memory access priority. Memory control unit 210 creates control signals for shared memory 20. Watchdog unit 250 provides a watchdog capability by monitoring the ALE signal of system controller 40, which relates to the status of the motor controller 30, sending an interrupt message to system controller 40 if motor controller 30 is not functional. Clock unit 260 generates clock signals based on the system clock (not shown).

Additionally, shared memory controller 10 provides address decoding and ready generation capability and temporary data storage for sensor bus controller 50.

Shared memory controller 10 in conjunction with external circuitry also provides the ability to download program and data information to motor controller 30. This allows the use of a read-only memory (ROM) module containing all system software, allowing efficient software updates in the field.

Shared memory controller 10 can preferably be implemented in an NCR 1.5 micron Gate Array device such as model VGX1500.4 available from NCR of Dayton, Ohio. This device has 1200 gates and 68 pads. The package is an 84-pin plastic leaded chip carrier (PLCC) that is identical to the original implementation by Xilnix, Inc. of San Jose, California.

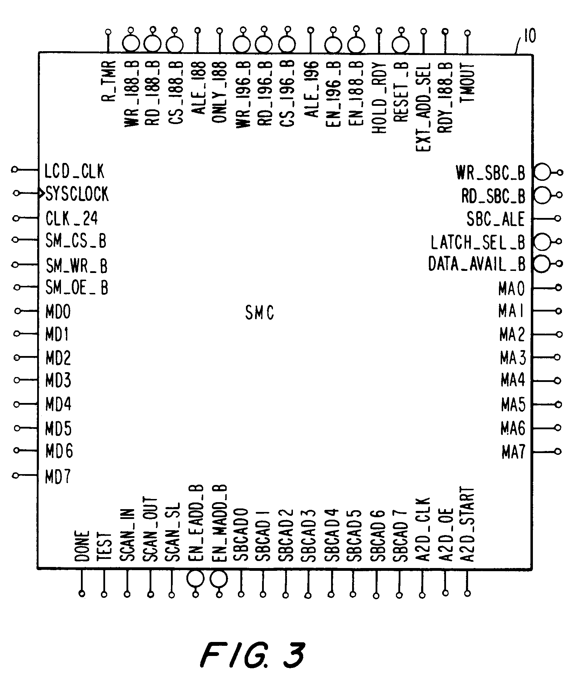

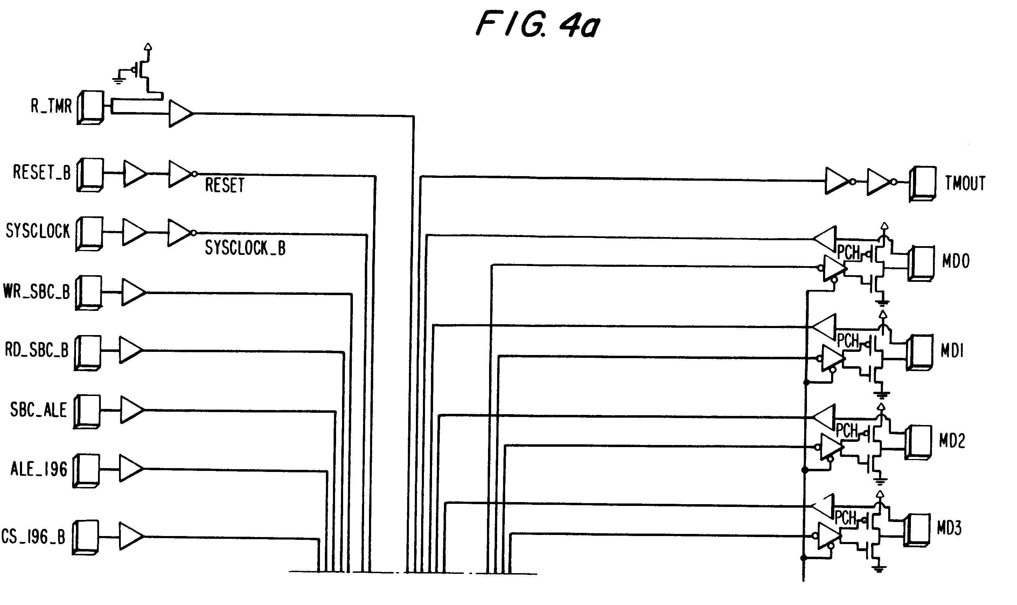

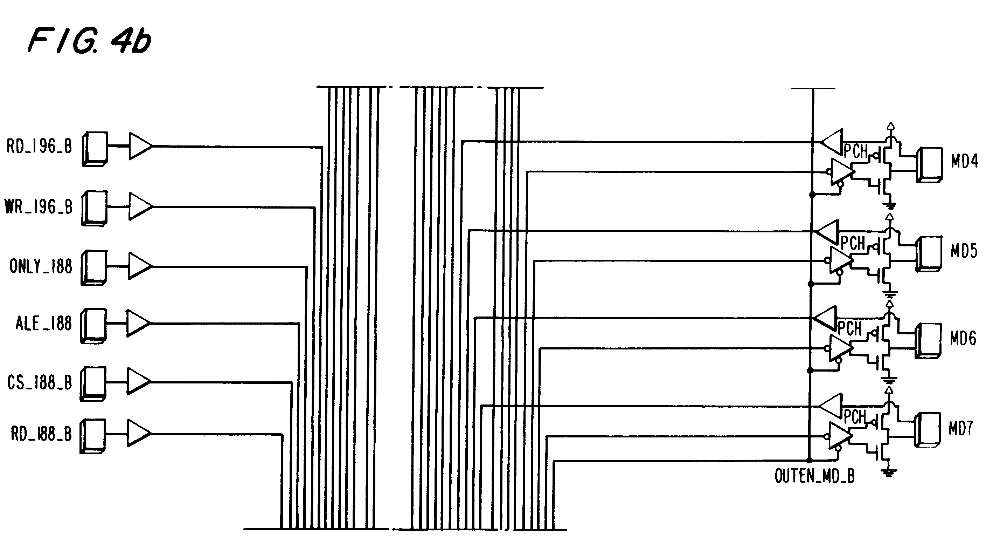

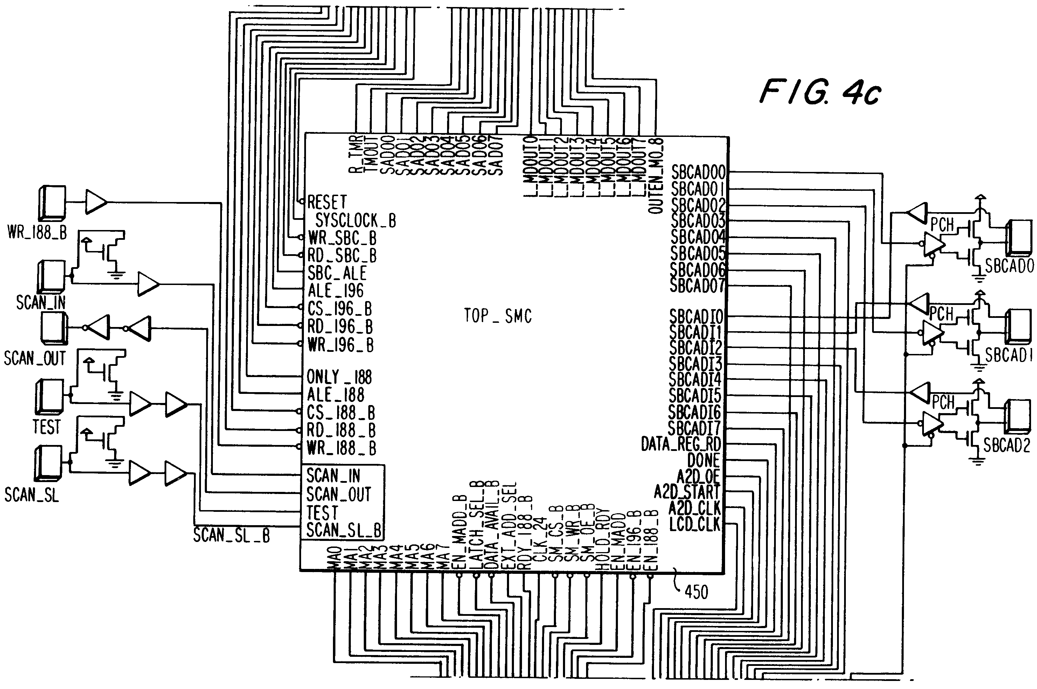

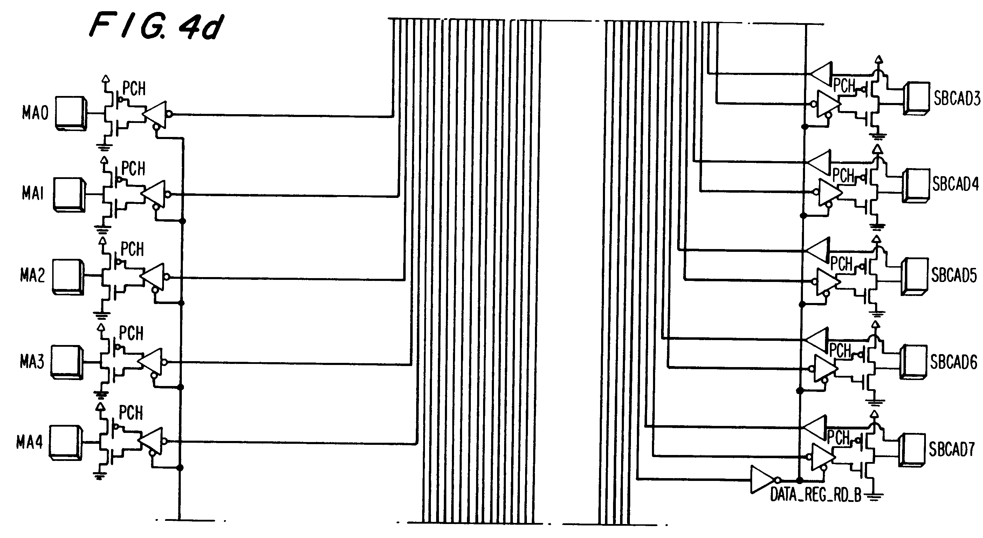

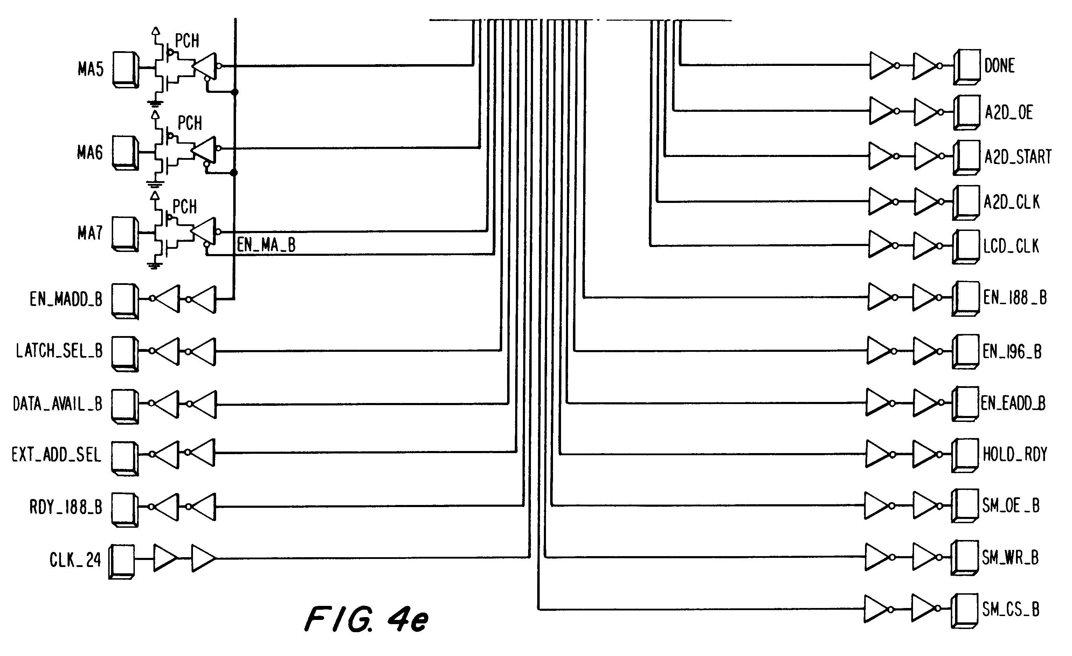

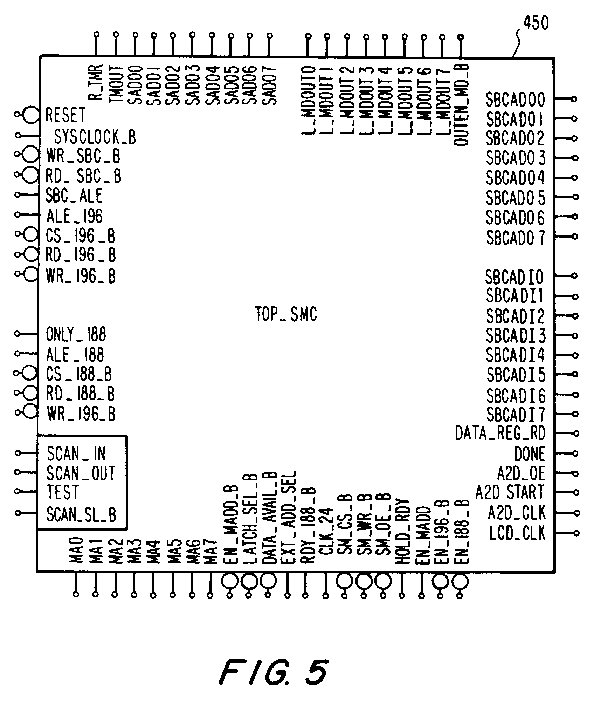

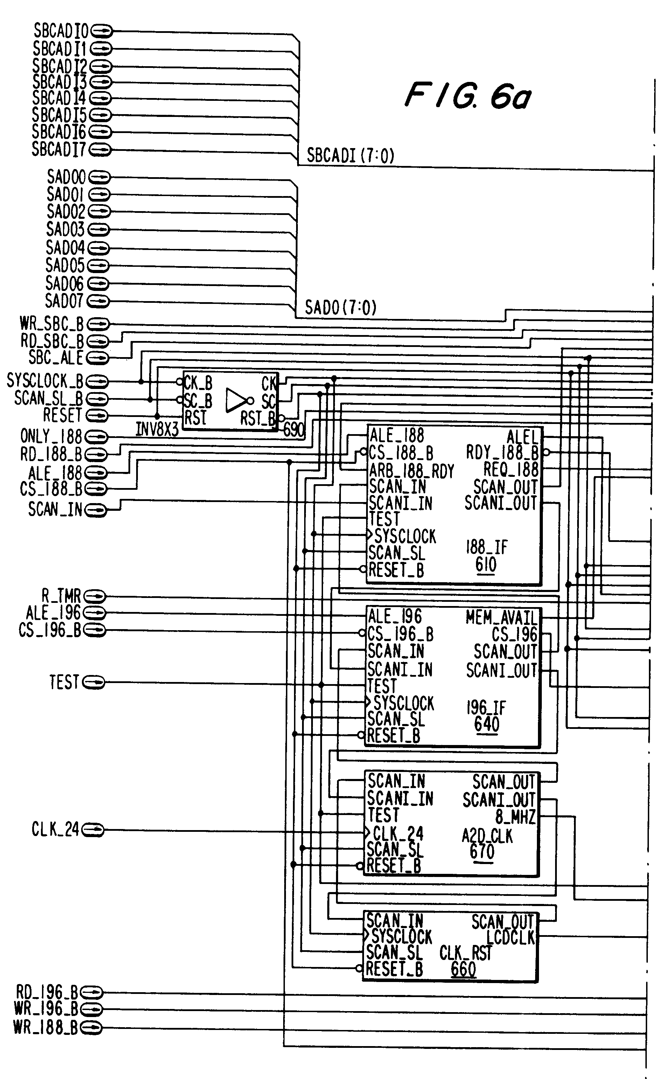

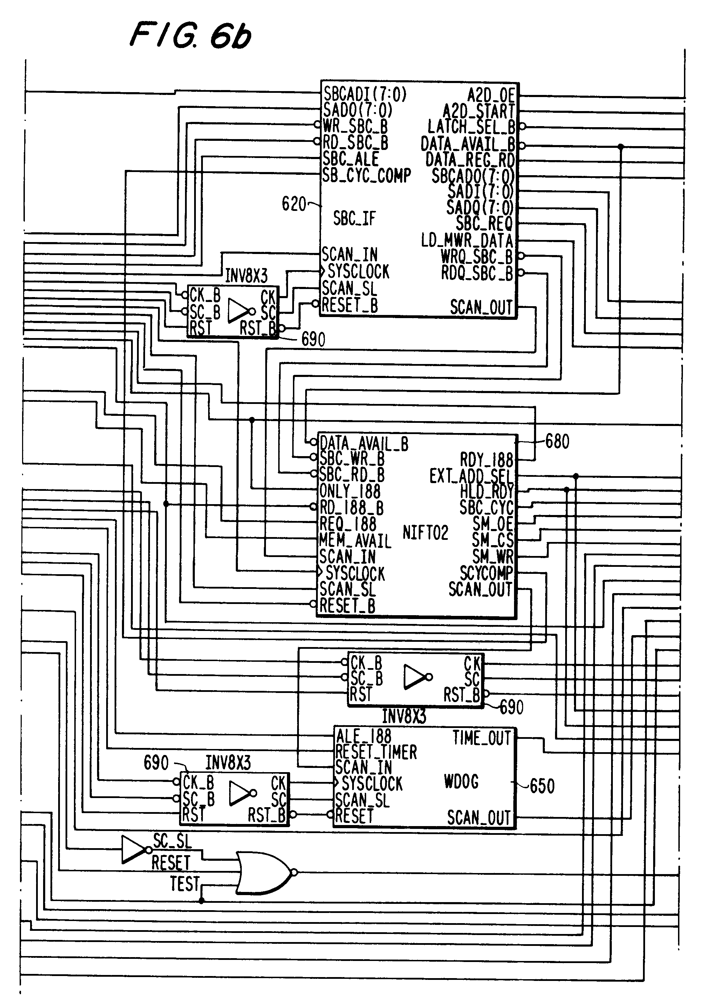

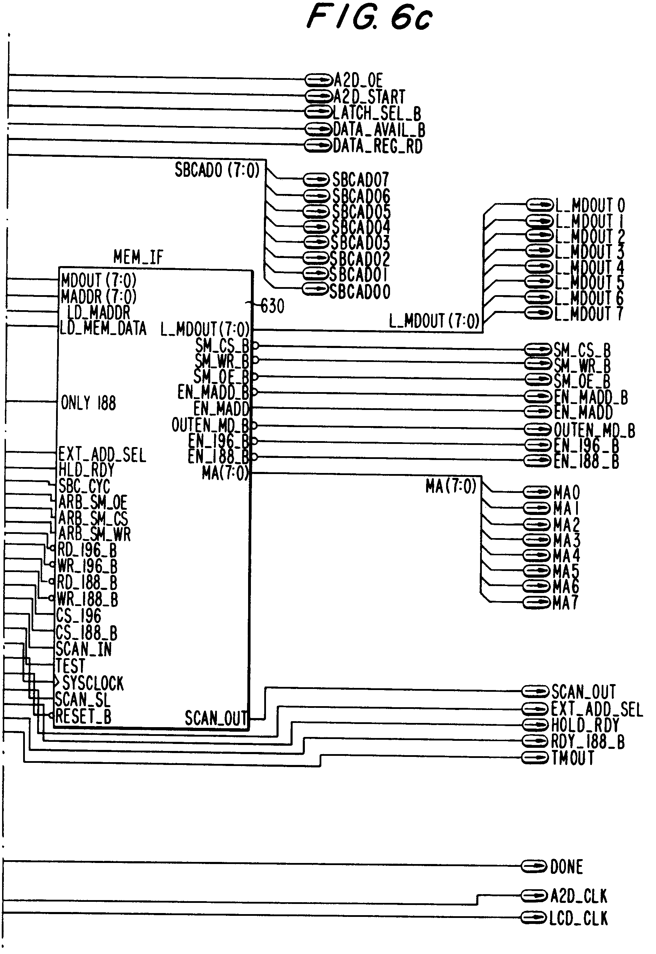

Shown in FIG. 3 is a pin diagram of shared memory controller 10. The schematic diagram of FIGS. 4a-e show shared memory controller 10 to consist of TOP_SMC module 450 surrounded by peripheral buffer circuitry. The pin diagram of TOP_SMC module 450 is shown in FIG. 5. The various modules that comprise TOP_SMC module 450 are shown in FIGS. 6a-c. General signals of shared memory controller 10 include:

SYSCLOCK - 12 MHz fundamental clock (input, pin 57). This clock input is used to clock all flip-flops in shared memory controller 10 with the exception of the analog to digital clock circuitry that runs at 24 MHz. This input should preferably be a 12 MHz square waveform with symmetry of 50% ± 15%. Rise and fall times should preferably be less than 10 ns. This clock is also preferably used in the scan test mode (described below) to clock all flip-flips.

CLK_24 - 24 MHz system clock (input, pin 13). This input is used to derive an 8 MHz output clock for the analog to digital converter of sensor bus controller 50. In scan test mode it should be driven with the 12 MHz input clock signal.

A2D_CLK - analog-to-digital converter clock (output, pin 78). This output clock is generated by dividing the CLK_24 input by three. This output will be an 8 MHz square wave within ± 10% symmetry. This output is used as the primary operational frequency for the analog-to-digital converter used by the sensor bus controller 50.

LCD_CLK - LCD display controller clock (output, pin 30). This output is generated by dividing the SYSCLOCK input (12 MHz) by eight. This clock is used as the primary operational frequency of the personality module LCD controller. This output will be a 1.5 MHz square wave within ± 10% of symmetry.

RESET_B - system reset (input, pin 54). This active low input is derived from the power on reset signal to system controller 40. This input initiates the configuration process.

DONE - initialization complete (output, pin 53). When asserted, this output indicates that the initialization process is complete. When this signal is low shared memory controller 10 is in a test and/or reset mode.

VCC - positive supply voltage (input, pins 22, 64). These power pins should be connected to a noise-free decoupled source that under all operating conditions will be +5 Volt D.C. ± 5%.

GND - digital logic ground (input, pins 1, 43). These power pins should be connected to a noise-free decoupled ground reference.

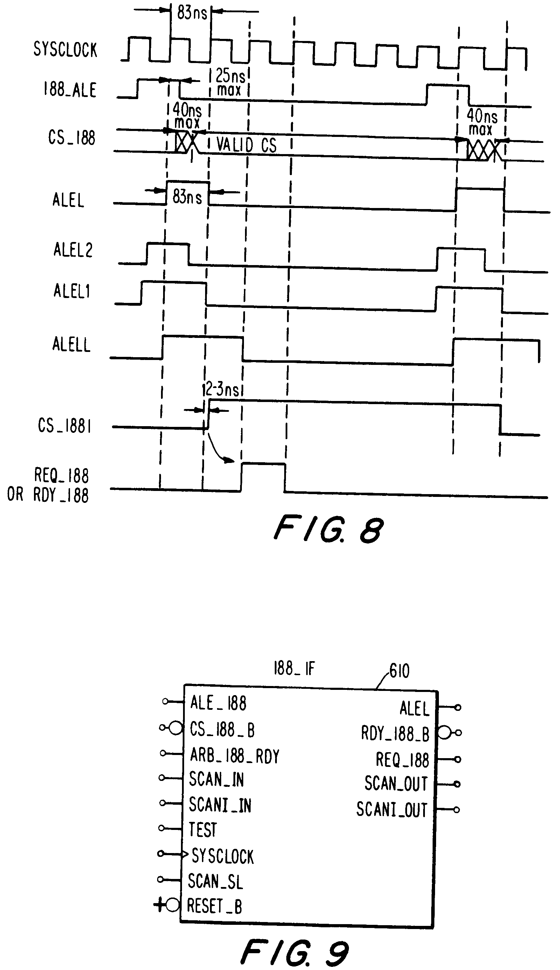

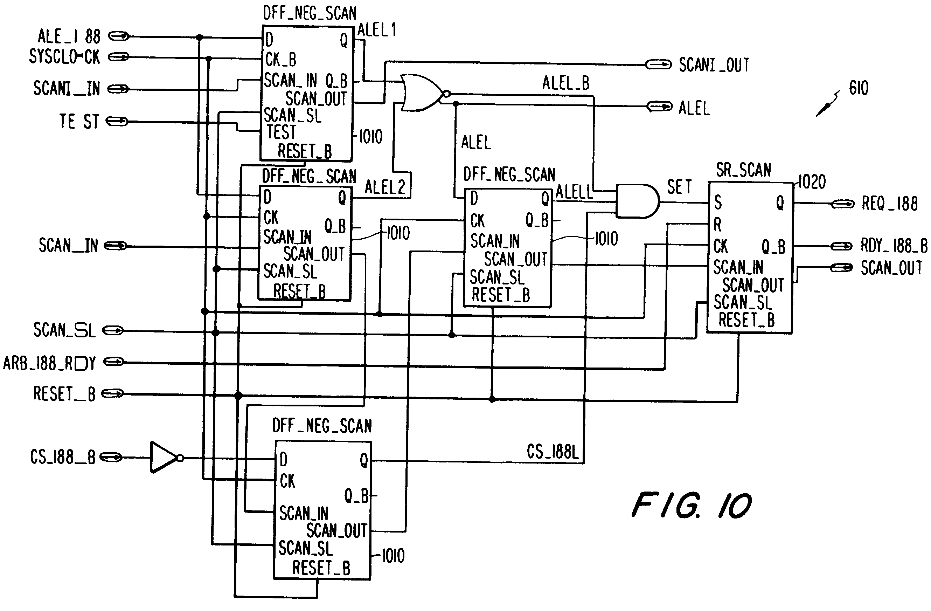

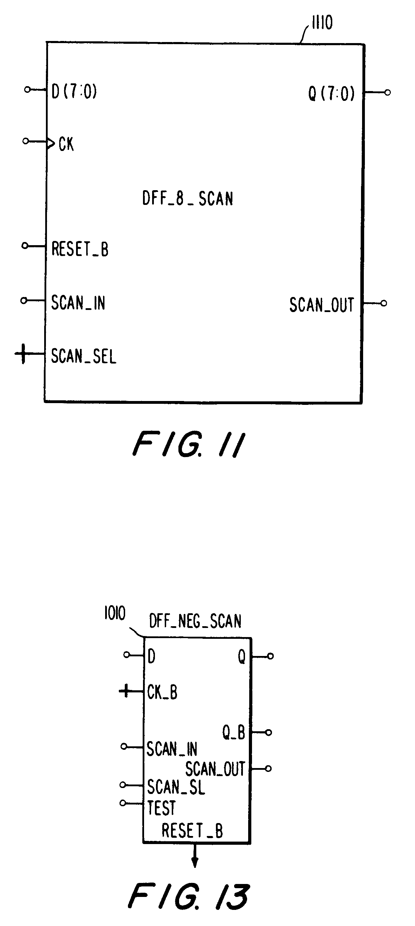

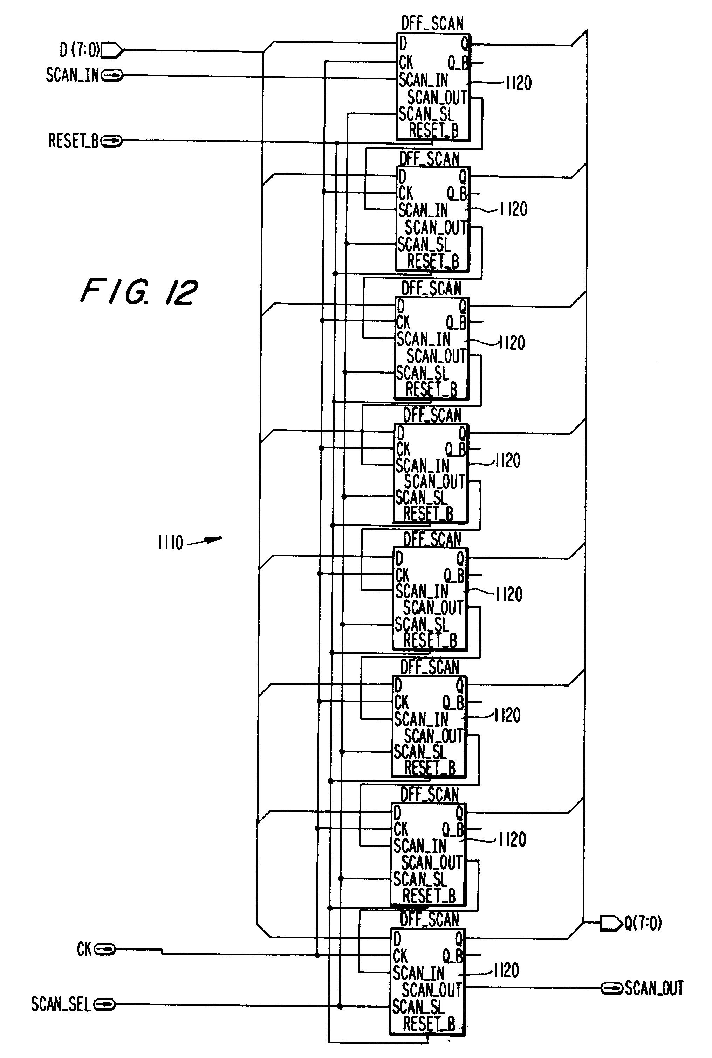

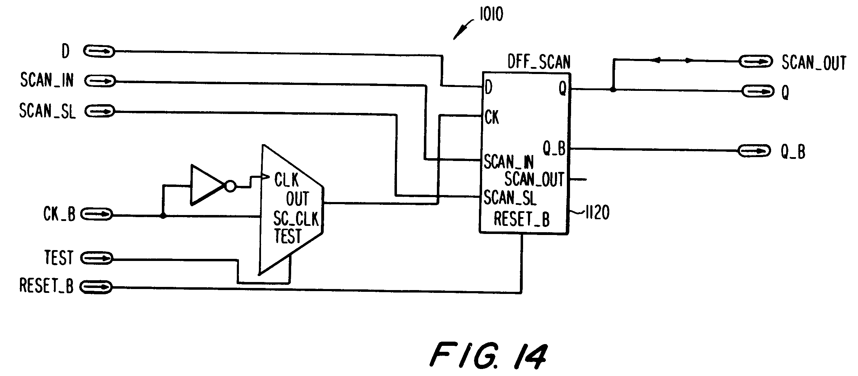

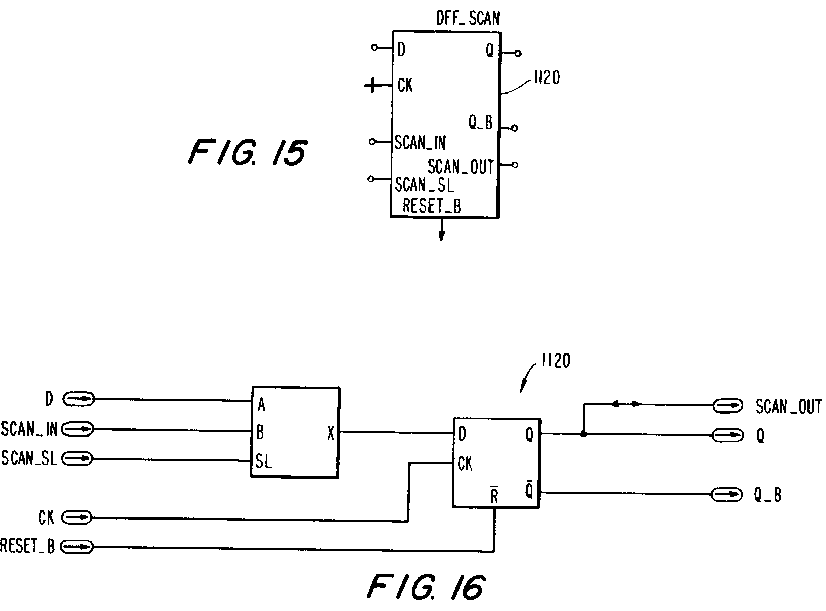

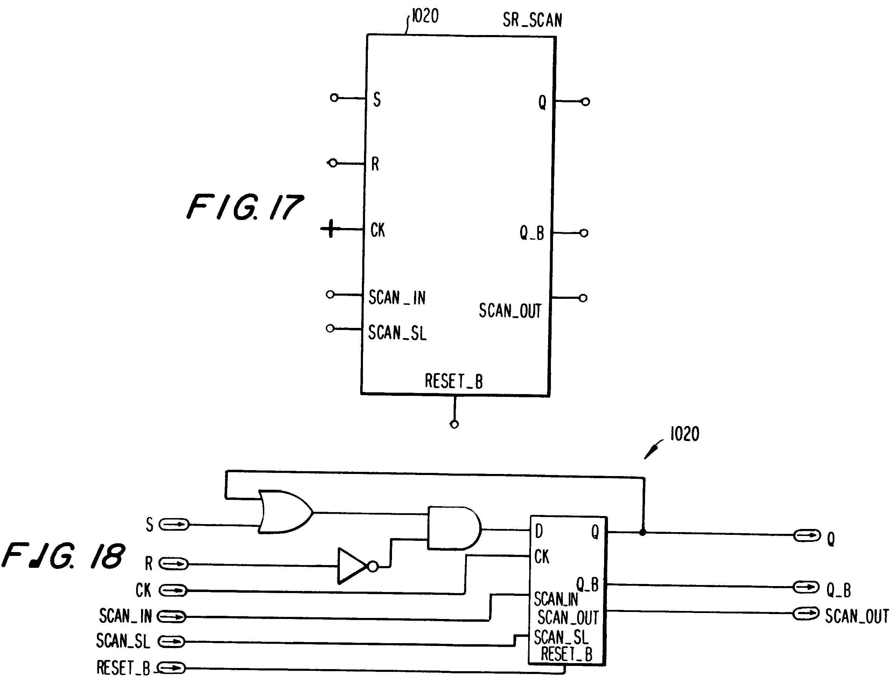

System controller interface 220 is shown in the functional block diagram of FIG. 2. The interconnection diagram for corresponding system interface module 610 is shown in FIGS. 6a-c, while a timing diagram, the pin diagram, and the circuit schematic for this element are shown in FIGS. 8, 9, and 10, respectively. FIGS. 11-18 show modules that are contained in system controller interface module 610 as well as other modules. Functions provided by system controller interface module 610 include synchronous memory request processing and data ready control. A mode selection is also provided to run shared memory controller 10 in ONLY_188 mode or arbitration mode. The ONLY_188 mode is entered when the ONLY_188 signal provided by system controller 40 is true. This mode allows system controller 40 to access shared memory 20 without waiting for the "memory available" indication from motor controller interface 240. This mode is used only when motor controller 30 is not operational. When the ONLY_188 signal is not true the accesses of system controller 40 to shared memory 20 are arbitrated. This implies that system controller 40 waits until motor controller 30 accesses a device other than shared memory 20 and sensor bus controller 50 does not have a request pending.

Referring to FIGS. 2-6 and 8-19, signals relating to system controller interface 220 include:

ALE_188 - address latch enable of system controller 40 (input, pin 39). This input indicates that system controller 40 has placed a valid address on its bus. ALE_188 is used with the 188 chip select signal to generate a memory access request by system controller 40 to the arbitration unit. ALE low after a falling edge indicates that the chip select signal is valid and a request by system controller 40 may be generated.

RD_188_B - system controller RD data strobe (input, pin 62). This input indicates that system controller 40 is performing a read cycle. This active low signal indicates to the responding device that the data to be read can be placed on the data bus. This signal is used in shared memory controller 10 to control data buffer enables, and by arbitration unit 200 as a conditional input for state transitions. The signal is synchronized when used by arbitration unit 200, and is used by asynchronously for buffer control.

WR_188_B - system controller WR data strobe (input, pin 48). This active low input indicates that system controller 40 is performing a write cycle. The rising edge of this signal may be used to store data. It is used in shared memory controller 10 to control data buffer enables, and by arbitration unit 200 as a conditional input for state transitions. The signal is synchronized when used by arbitration unit 200, and is used asynchronously for data control.

RDY_188_B - system controller ready signal (output, pin 45). This signal is used to indicate to system controller 40 that the currently addressed device has received or provided data and the cycle can be terminated. The signal provides a variable length wait period for system controller 40 when accessing shared memory 20. It is driven low when a request by system controller 40 is active. When data has been stored or retrieved (depending on cycle type) this signal will be high to indicate that system controller 40 can proceed.

ONLY_188 - arbitration mode select (input, pin 40). This input is used to place the state machine of arbitration unit 200 in system controller only mode or in multiprocessor arbitrated mode. The input is active high to indicate that system controller 40 is the only processor allowed to access shared memory 200 and it is low in arbitration mode.

CS_188 - system controller chip select (input, pin 29). This active low input indicates that system controller 40 has addressed shared memory controller 10 and when combined with a synchronized version of the ALE_188 signal an access request by system controller 40 to arbitration unit 200 will be generated. This signal may remain low during back to back cycles - a proper request after the second ALE will still be generated.

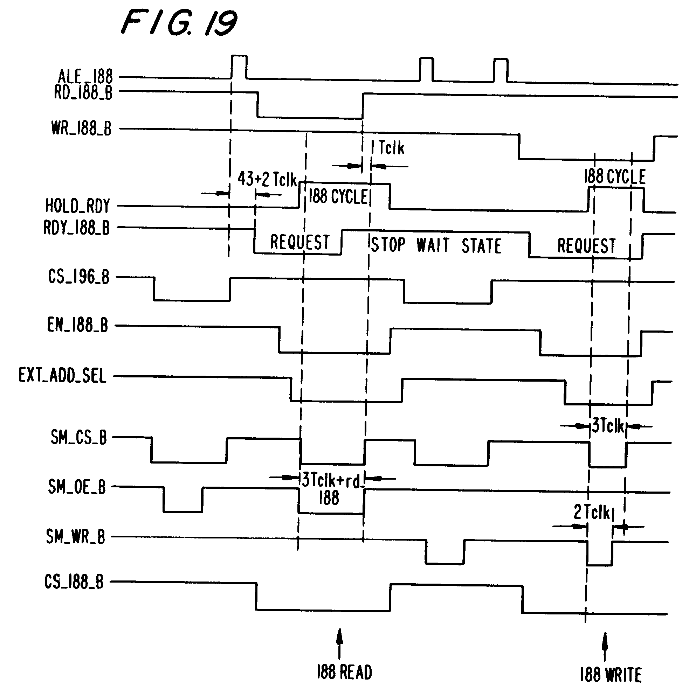

FIG. 19 is a timing diagram showing typical memory read and write cycles of system controller 40. The system controller memory request signal is generated in system controller interface module 610 by detecting the ALE signal and the chip select signal. A request will be generated only if a valid chip select signal is asserted one clock cycle after a valid ALE pulse occurs. The 188_REQ generation signal is shown in FIG. 8.

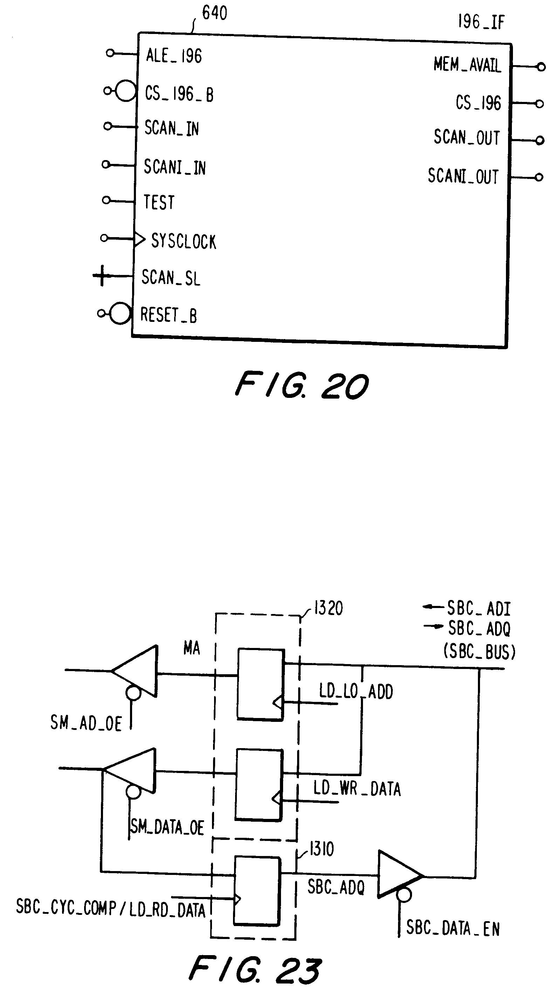

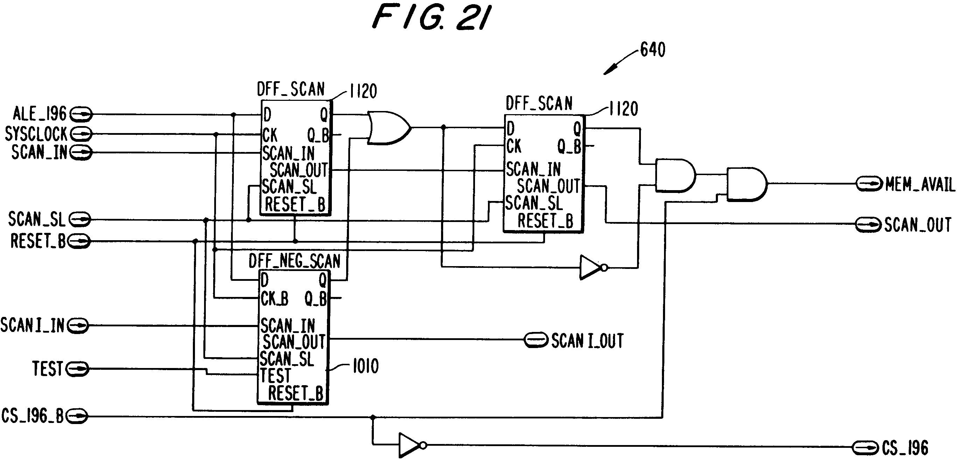

As shown in FIG. 2 shared memory controller 10 contains motor controller interface 240. The interconnections of corresponding motor controller interface module 640 and the other module of shared memory controller 10 are shown in FIGS. 6a-c. The pin diagram and circuit schematic of diagram of motor controller module 64 are shown in FIGS. 20 and 21, respectively. In arbitrated mode shared memory controller 10 provides motor controller 30 with efficient asynchronous access to shared memory 20. Motor controller interface module 640 generates the signal MEM_AVAIL. This synchronous signal is used to allow other processors access to shared memory 20 when motor controller 30 is not accessing shared memory 20. The access of motor controller 30 to shared memory 20 is purely combinatorial, thus no synchronization or metastabilization delays are introduced.

Referring to FIGS. 2-7 and 20-22, signals relating to motor controller interface 240 include:

CS_196 - motor controller chip select (input, pin 52). This active low input indicates that motor controller 30 has addressed shared memory 20. This input should be active before or coincident with the falling edge of ALE_196. This signal in conjunction with ALE_196 is used to make a synchronous arbitration decision. When this signal is active an immediate memory access for motor controller 30 is granted unless an earlier cycle by sensor bus controller 50 or system controller 40 is currently being serviced. This signal should remain active throughout the cycle.

HOLD_READY - motor controller overlapped cycle delay (output, pin 61). This active low output is asserted any time a device other than motor controller 30 is accessing shared memory 20. Arbitration unit 200 assures that motor controller 30 gets priority access, and cycles are overlapped during access by motor controller 30 to assure minimum latency for the processor of motor controller 30. The signal is used to delay access by motor controller 30 to shared memory 20 while it is in use. The signal should be gated in the external programmable array logic (PAL), since the access cycle for motor controller 30 should only be delayed when shared memory 20 is addressed, and this is done in external logic.

RD_196_B - motor controller read data strobe (input, pin 59). This active low input indicates that motor controller 30 is performing a read cycle. When active the responding device may place data on the data bus. This signal is used in shared memory controller 10 to control data buffer enables.

WR_196_B - motor controller write data strobe (input, pin 46). This input indicates that motor controller 30 is performing a write cycle. This signal is active low, the rising edge of this signal is used to store the data in shared memory 20.

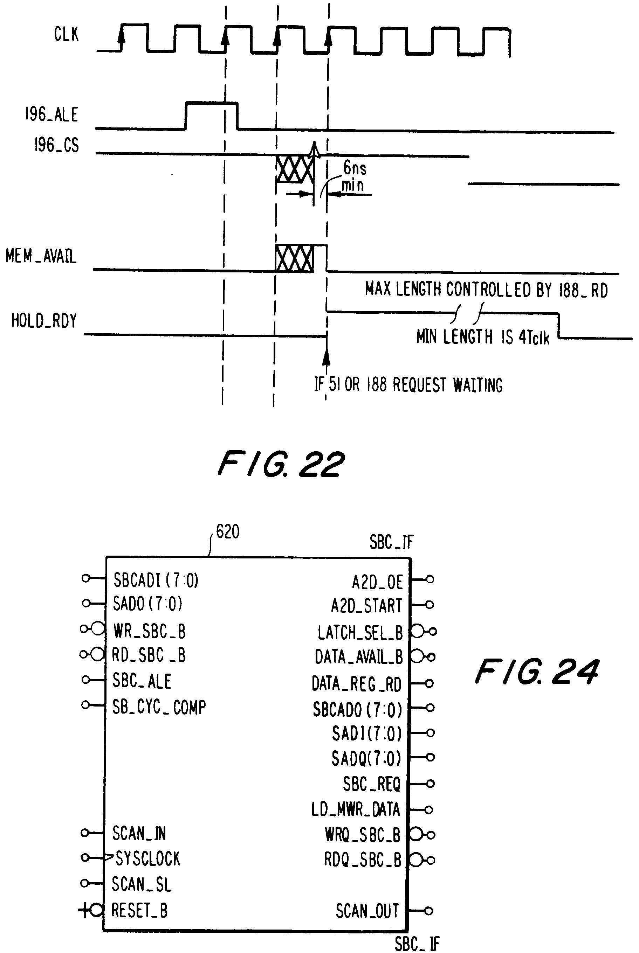

A timing diagram that depicts the relationship between the 196_ALE input and the MEM_AVAIL signal used by the other processors to access memory is depicted in FIG. 22. When MEM_AVAIL signal is asserted system controller 40 or sensor bus controller 50 can access memory. During an access by system controller 40 or sensor bus controller 50 the HOLD_RDY signal is asserted to indicate to motor controller 30 that an access to shared memory 20 cannot be granted. As soon as the access is completed HOLD_RDY is released and the processor of motor controller 30 has priority for memory access again. While motor controller 30 can tolerate the slight delay while waiting for the HOLD_RDY signal to be released, the system would fail if motor controller 30 attempted access of shared memory 20.

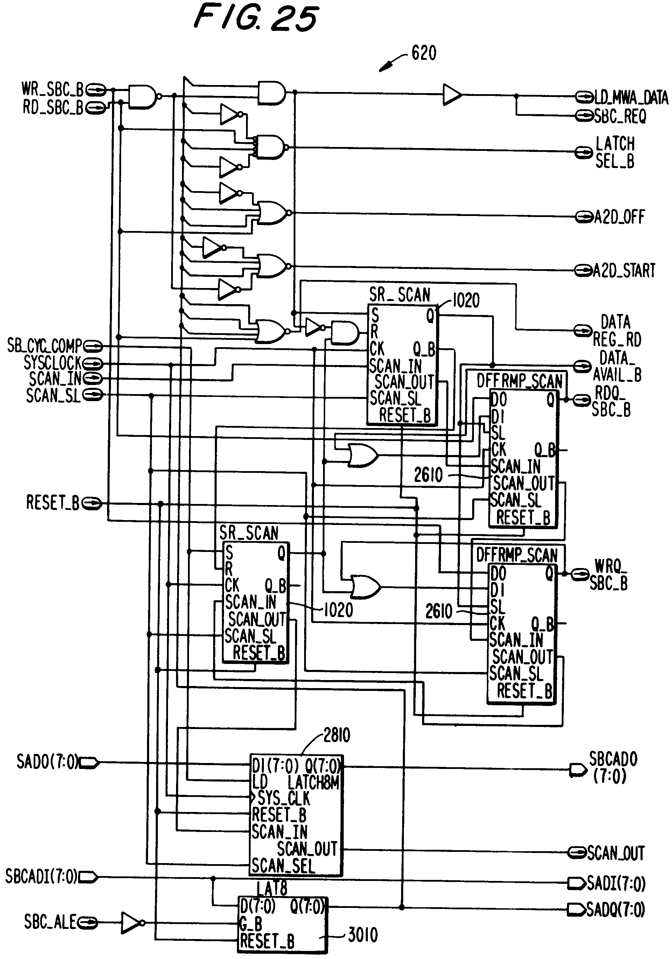

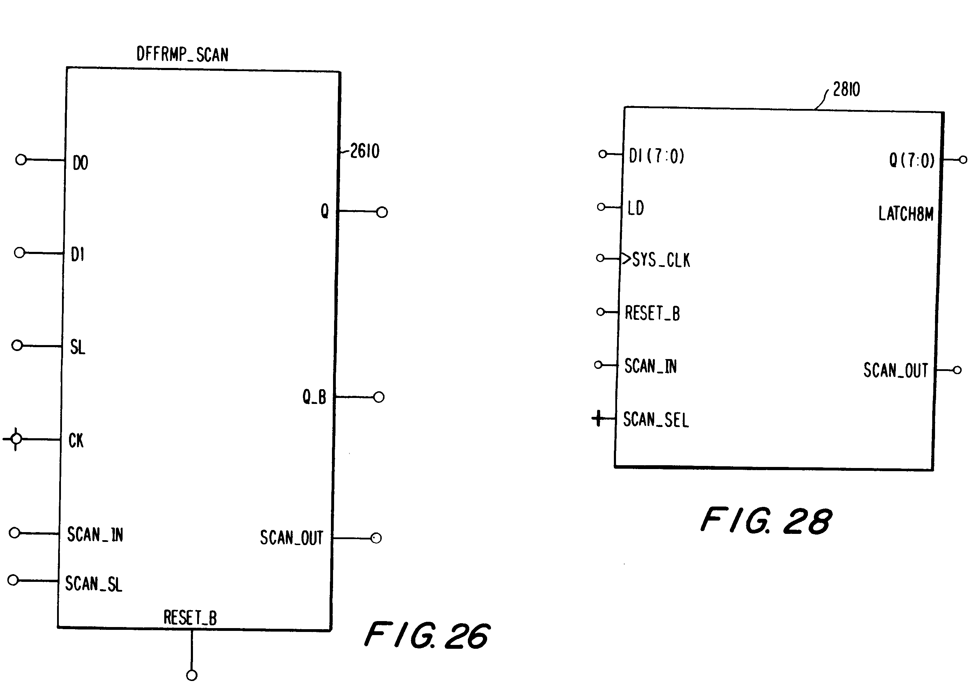

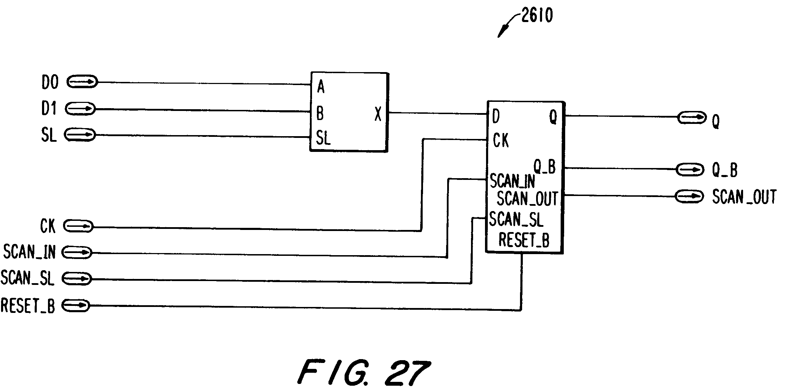

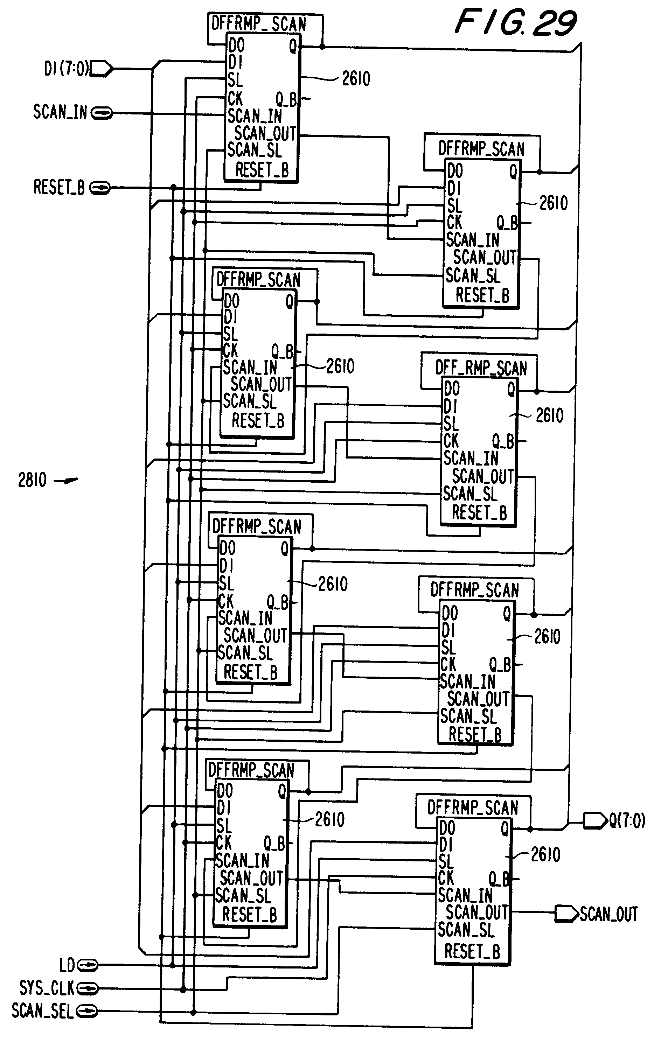

Sensor bus controller interface 230 is shown in FIG. 2. Referring to FIGS. 6b, 23-29, corresponding sensor bus controller interface module 620 provides sensor bus controller 50 with shared memory access control, temporary storage, address decode, and memory status functions. Sensor bus controller interface logic 1310, which performs these functions is shown as a logic block in FIG. 23. The interconnection diagram, pin diagram and circuit schematic for sensor bus controller interface module 620 are shown in FIGS. 6b, 24, and 25, respectively. The central processing unit (CPU) 80C51 of sensor bus controller 50 is a fixed cycle time processor, therefore its cycle cannot be extended to wait for memory access when contention between processors occurs. For this reason sensor bus controller interface 230 to shared memory 20 is decoupled. This is accomplished through a hardware semaphore flag to indicate memory cycle completion. Sensor bus controller 50 transfers to motor controller 30 sensor data used to calculate motor profiles and motor commands. Thus, motor controller 30 can fail if this information is not readily available. For this reason sensor bus controller 50 has second priority to access shared memory 30, followed by the system controller interface 220.

Referring to FIGS. 2-6 and to FIGS. 23-32, which show modules relating to sensor bus controller interface 230, signals relating to sensor bus controller interface 230 include:

SBC_AD (0:7) - address data sensor bus controller (80C51) bus (bidirectional, pins SBC_ADO 2, SBC_AD4 4, SBC_AD1 5, SBC_AD5 11, SBC_AD2 3, SBC_AD6 10, SBC_AD3 8, and SBC_AD7 9). These eight signals are the address/data bus of sensor bus controller 50. When sensor bus controller 20 writes to shared memory controller 10 these signals should be valid 40 nsec prior to the negation, and 60 nsec after the negation or the WR_SBC_B signal. When the SBC_RD_B and the CS_SBC signals are active these signals will be driven. The upper address for memory access is set by motor controller 30 through the upper memory latch external to shared memory controller 10. In this manner motor controller 30 selects the 128-byte page that sensor bus controller 50 can access. The lower 8 address bits are decoded in shared memory controller 10 as follows:

| Device | SBC_AD(0:7) | Operation Allowed |
|---|---|---|
| Data Holding Register | 00h-1Fh | READ |
| A2D Output Enable | 20h-3Fh | READ |
| A2D Start Command | 40h-5Fh | WRITE/READ |
| Latch Select | 60h-7Fh | READ |
| Shared Memory | 80h-FFh | WRITE/READ |

SBC_A2D_OE_B - sensor bus controller analog-to-digital converter output enable (output, pin 84). This active high output is a function of the address decoder in shared memory controller 10. The output is provided as a support function to sensor bus controller 50. Shared memory controller 10 will latch AD0 through AD7 and decode different address selects, the decode function is shown in the table above.

SBC_A2D_START_B - sensor bus controller analog-to-digital converter start command (output, pin 26). This active high output is a function of the address decoder in shared memory controller 10, as shown above. The output is provided as a support function to sensor bus controller 50.

LATCH_SEL_B - sensor bus controller latch select (output, pin 27). This active low output is a function of the address decoder in shared memory controller 10 as specified in the above table. The output is provided as a support function for sensor bus controller 50.

SBC_ALE - sensor bus controller address latch enable (input, pin 35). This input is used to latch on the sensor bus controller address/data input bus. The address should be valid a minimum of 20 ns prior to the falling edge of SBC_ALE to assure data setup time on input latches are not violated.

WR_SBC - sensor bus controller write data strobe (input, pin 57). This input is used to latch data from sensor bus controller 50. This input is active low and the address data signals are required to be valid around the rising edge of the WR_SBC signal.

RD_SBC - sensor bus controller read data strobe (input, pin 24). This input is used to read data from shared memory controller 10 to sensor bus controller 50. The input is active low and the data signals that it enables will be valid while both the RD_SBC is enabled and a valid sensor bus controller shared memory address has been latched and decoded by shared memory controller 10.

SBC_DATA_AVAIL - signals that shared memory data is available to the sensor bus controller (output, pin 83). This active low output is used to indicate that memory data is available for sensor bus controller 50, or that shared memory controller 10 has completed the write access to shared memory 20 and shared memory controller 10 is ready to initiate another access. This data is asserted on a memory read to shared memory 20 (SBCAD 80 to FF) when data is latched in the internal holding register, and negated when the read cycle is complete; i.e., the data holding register has latched the data from shared memory 20. At this point sensor bus controller 50 can perform another read to the latched data at shared memory controller 10. This read is for shared memory controller 10 (SBCAD 00 to 1F) only and thus does not change the DATA_AVAIL_B signal. During a memory write cycle this signal is asserted upon a request of a write cycle and negated when the request for a write cycle is completed.

The access of sensor bus controller 50 to shared memory 20 is completed in two decoupled steps. The first step occurs when sensor bus controller 50 makes a request to shared memory 20 by addressing and transferring the data onto a register of shared memory controller 10. Subsequently, sensor bus controller 50 waits until the signal DATA_AVAIL indicates that the cycle has been completed. This signal is set whenever a cycle is requested and cleared when the cycle is complete. Shared memory controller 10 latches the address and data information for the cycle and drives that information onto the memory address and data buses. As shown in FIG. 23, this interface provides input and output latches for read and write data, as well as an address latch for the memory access address. Sensor bus controller 50 also provides address decode functions that are decoded using the lower 8 bits of address, latched onto shared memory controller 10 every cycle of sensor bus controller 50.

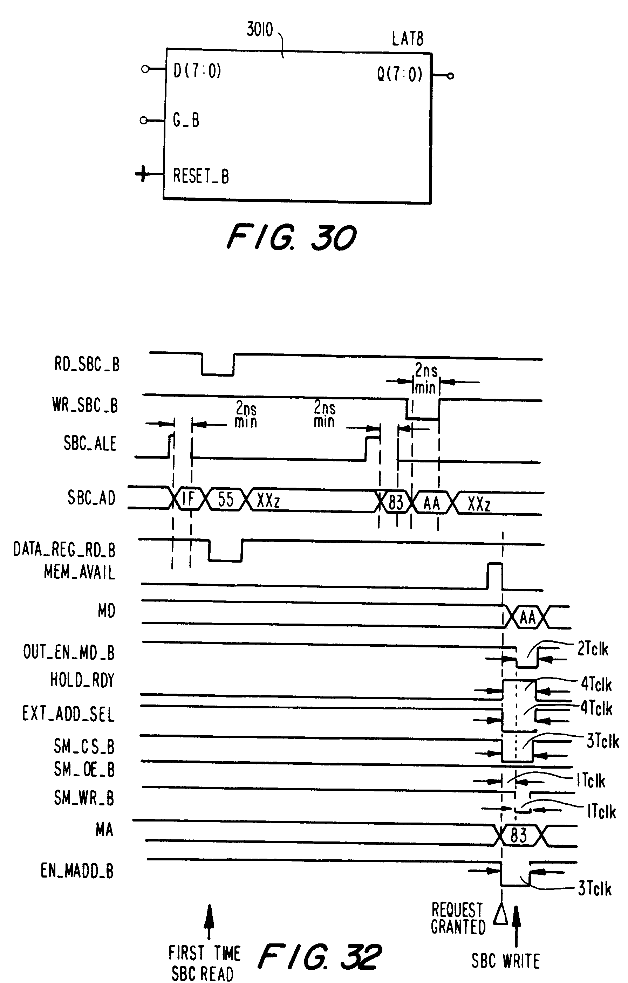

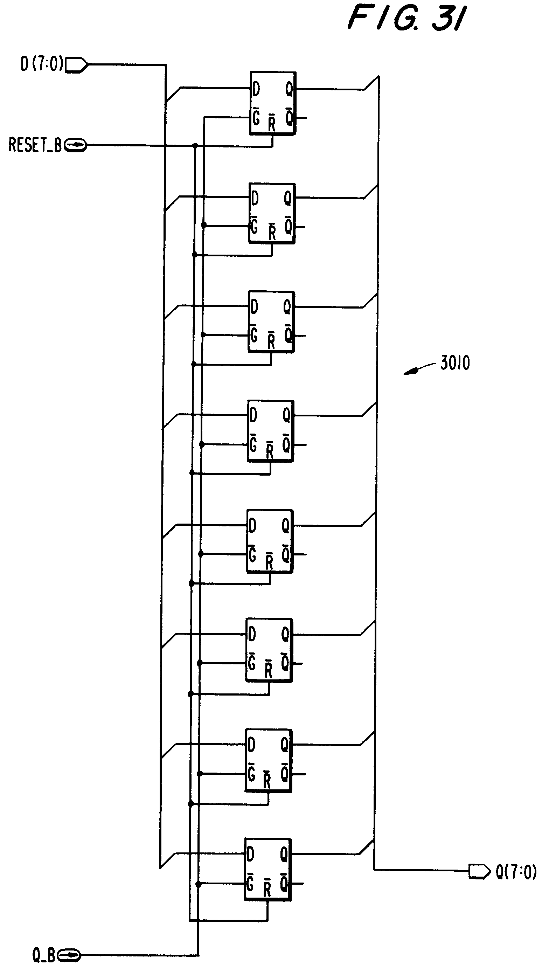

Referring to FIG. 32, the memory write sequence for sensor bus controller 50 is as follows:
(1) write data to any of the valid memory addresses (80h to FFh); and
(2) wait for data_AVAIL to be cleared, indicating that the data has been stored.

The memory read sequence for sensor bus controller 50 is as follows:
(1) initiate a memory read cycle by providing a valid address (80h to FFh);
(2) wait for data_AVAIL to be cleared, indicating that the requested data is stored in the data holding register; and
(3) read the data from the data holding register (addr 00 to 1Fh).

Note that EN_MADD_B follows SBL_CVC for access by sensor bus controls 50, staying high for other processors. Additionally, note the second read enables shared memory 20 by asserting SM_OE_B.

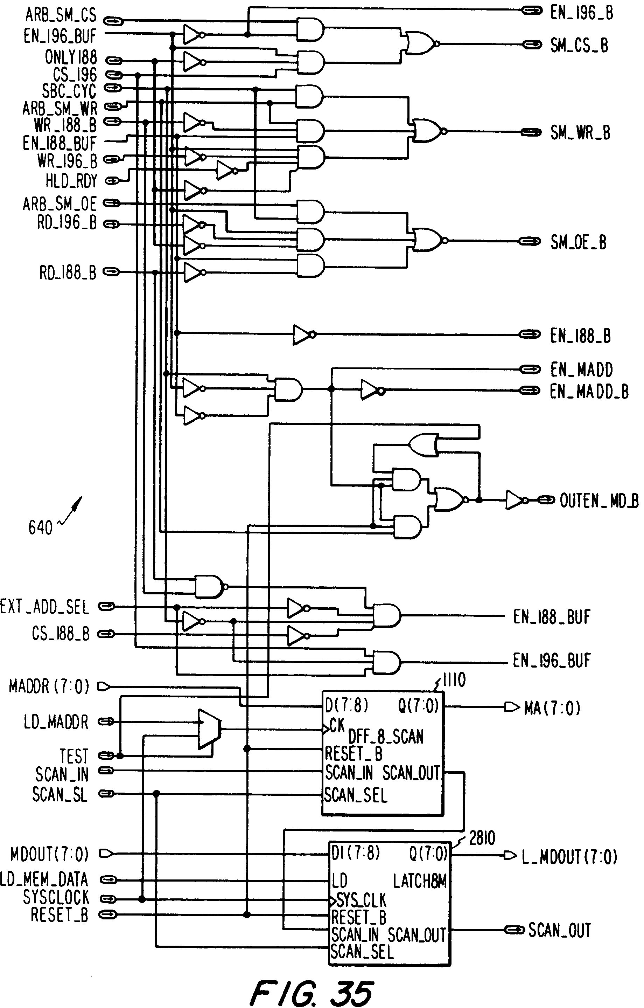

Referring to the functional block diagram of FIG. 2, shared memory controller 10 includes a memory control unit 210. FIG. 23 shows memory control logic 1320. Memory control unit 210 is implemented in hardware by memory interface module 630, shown in FIG. 6a. The interconnection diagram, timing diagram, pin diagram, and circuit schematic for memory interface module 1320 are shown in FIGS. 6a-c, 33, 34, and 35, respectively.

Referring to FIGS. 2-6, 11, 12, 23, 28, 29, 34, and 35, signals relating to memory control unit 210 include:

MA(7:0) - shared memory address bus (tri-state output, pins MA0 73, MA4 70, MA1 56, MA5 67, MA2 68, MA6 65, MA3 71, MA7 66). The memory address bus provides memory addresses to shared memory 20 during the accesses of sensor bus controller 50. When other devices are accessing memory these signals are tristated.

MD(7:0) - shared memory data bus (bidirectional, pins MD0 16, MD4 17, MD1 20, MD5 19, MD2 18, MD6 23, MD3 15, MD7 21). These signals are used to carry data to and from shared memory controller 10 to shared memory 20. These signals are actively driven only during cycles of sensor bus controller 50.

MEM_WR_B - shared memory write enable (output, pin 47). This active low output is asserted during memory write cycles and stores data into share memory 20 on its rising edge.

MEM_OE_B - shared memory output enable (output, pin 60). This active low output is asserted during memory read cycles to enable the output buffers of shared memory 20.

MEM_CS_B - shared memory chip select (output, pin 42). This active low output is asserted during memory read and write cycles to enable shared memory 20.

EN_196_B - output enable motor controller memory data buffer (output, pin 44). This active low output is asserted during memory read and write cycles of motor controller 30 to enable the external data buffer connected to shared memory 20.

EN_188_B - output enable system controller memory data buffer (output, pin 58). This active low output is asserted during memory read and write cycles by system controller 40 to enable the external data buffer connected to shared memory 20.

EN_EADD_B - output enable external memory address multiplexor (output, pin 75). This active low output is asserted during memory read and write cycles of motor controller 30 or system controller 40 to enable the external address multiplexor connected to shared memory 20.

EXT_ADD_SEL - external memory address multiplexor select (output, pin 49). This output enables the external address multiplexor to shared memory 20. This output is high during cycles of motor controller 30 to allow address signals of motor controller 30 to drive the shared memory address bus. During cycles of system controller 40 this signal is driven low to allow address signals of system controller 40 to drive address bus of shared memory 20.

EN_MADD_B - output enable external upper memory latch (output, pin 53). This active low output is asserted during the read and write cycles of sensor bus controller 50 to enable the external address latch connected to shared memory 20.

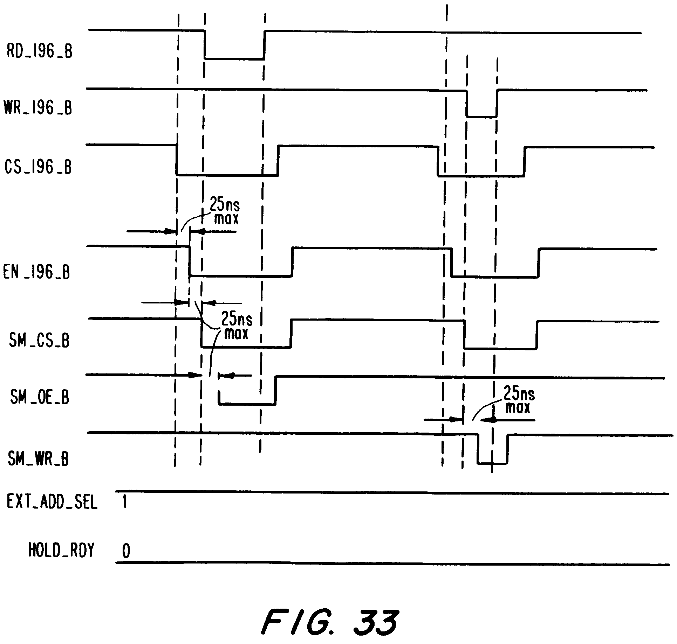

Functionally, memory interface module 630 creates strobes and control signals for shared memory 20. Output enables and multiplexer control for the shared memory address multiplexor and data buffers are also generated. The lower byte of the address and data of the cycles of the sensor bus controller 50 are also fed and controlled in this module. The worst-case timing diagram for memory signals in an access by motor controller 30 is shown in FIG. 33.

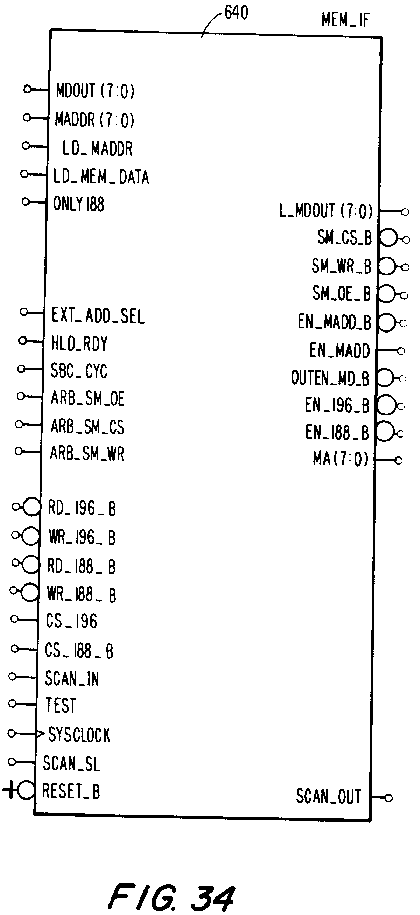

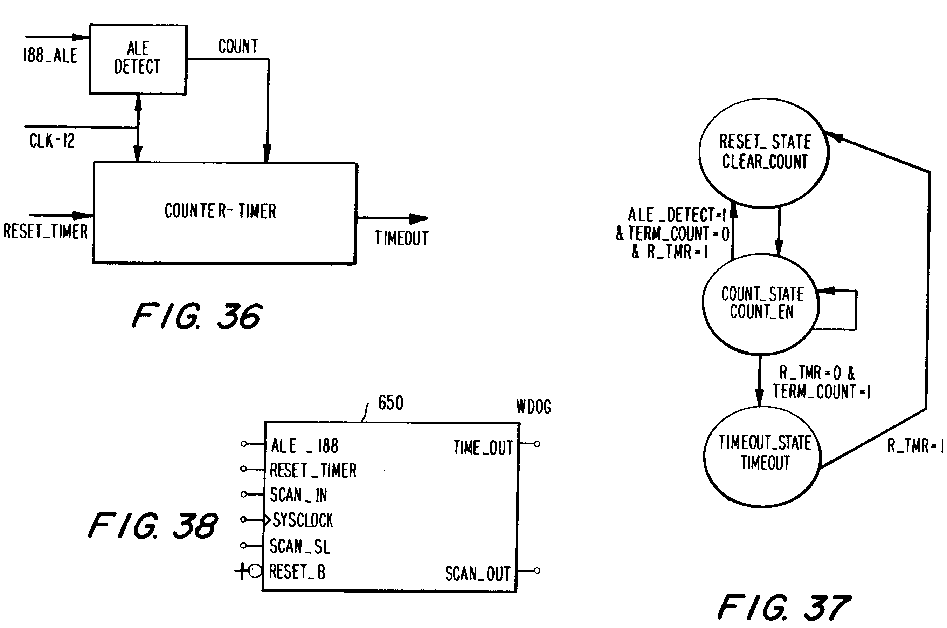

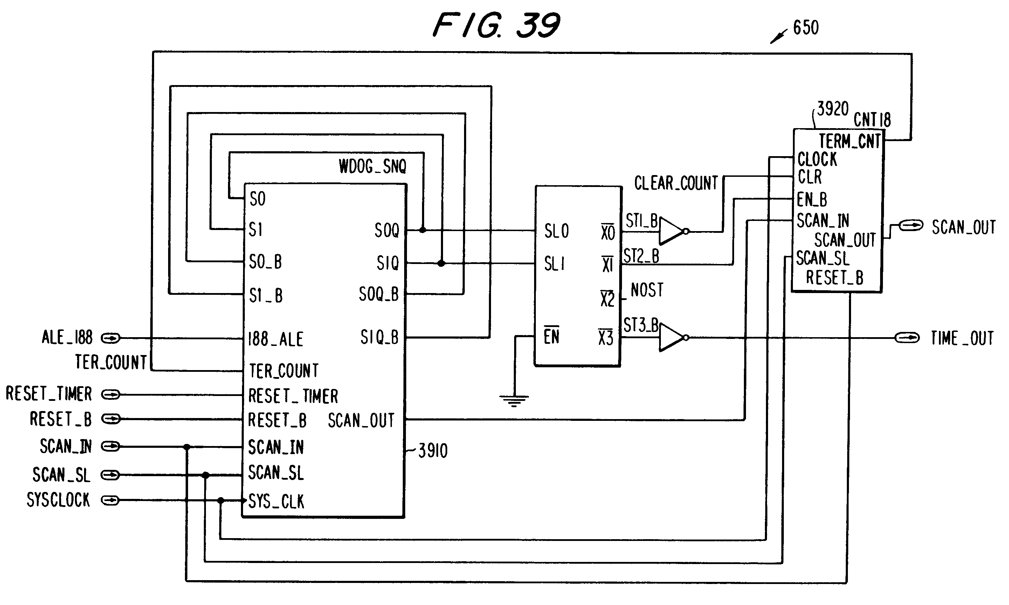

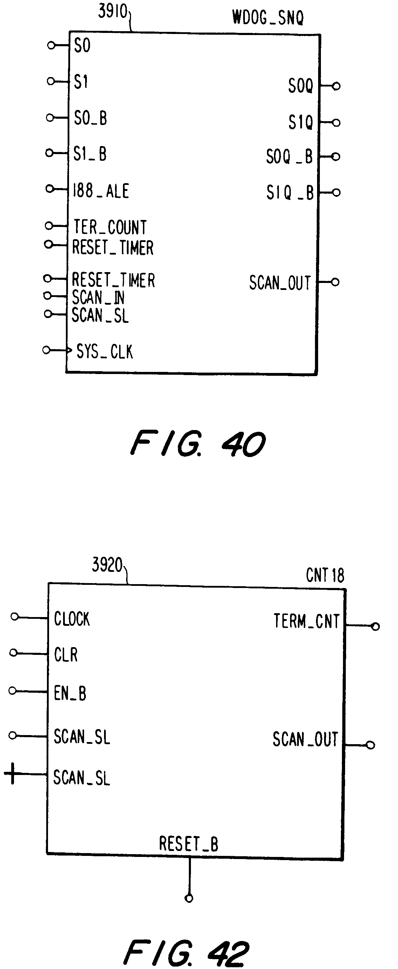

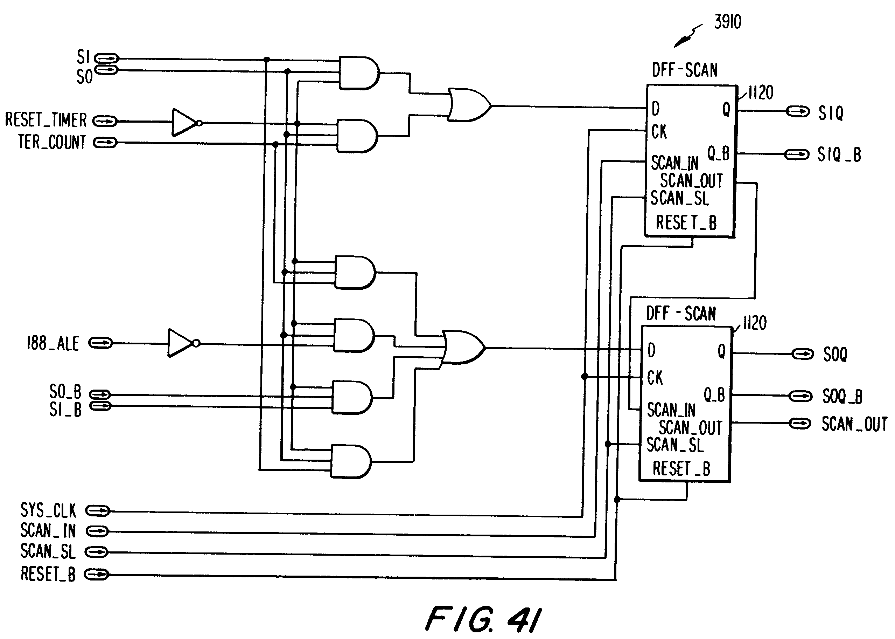

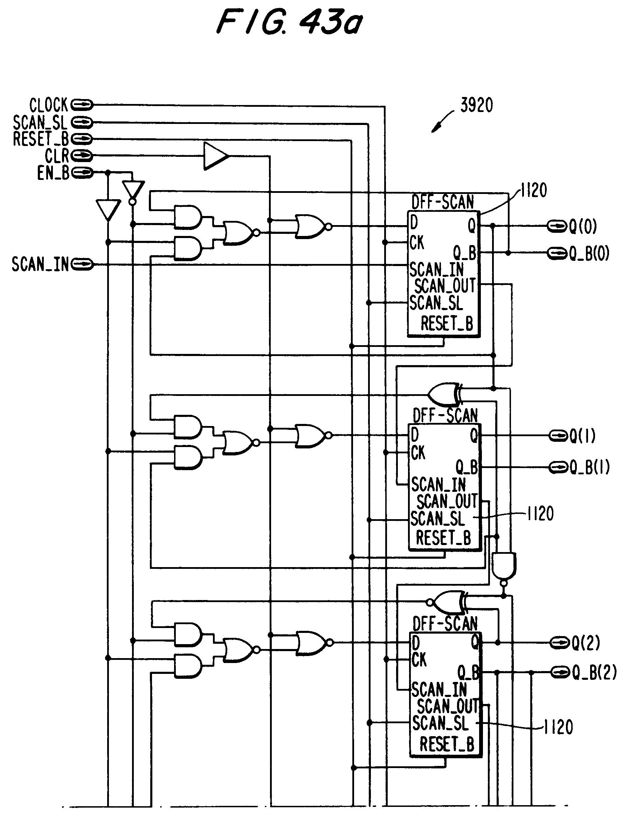

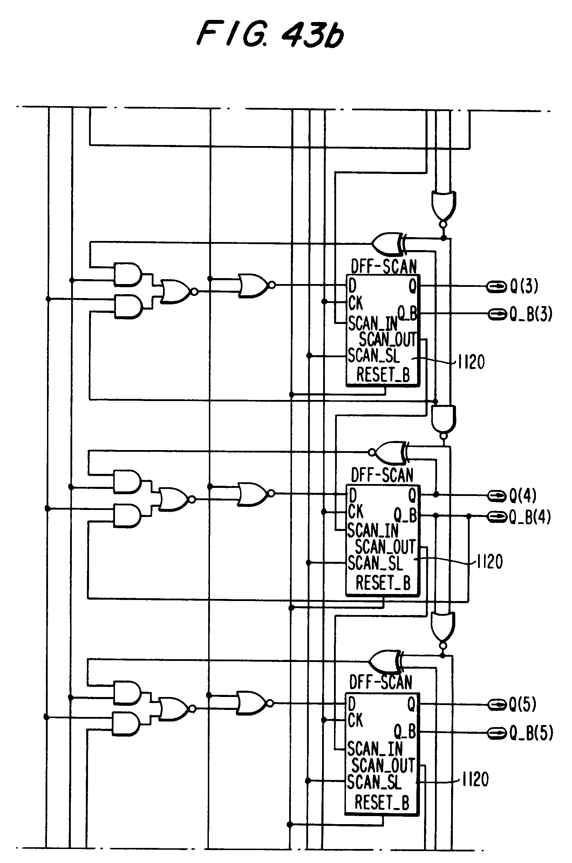

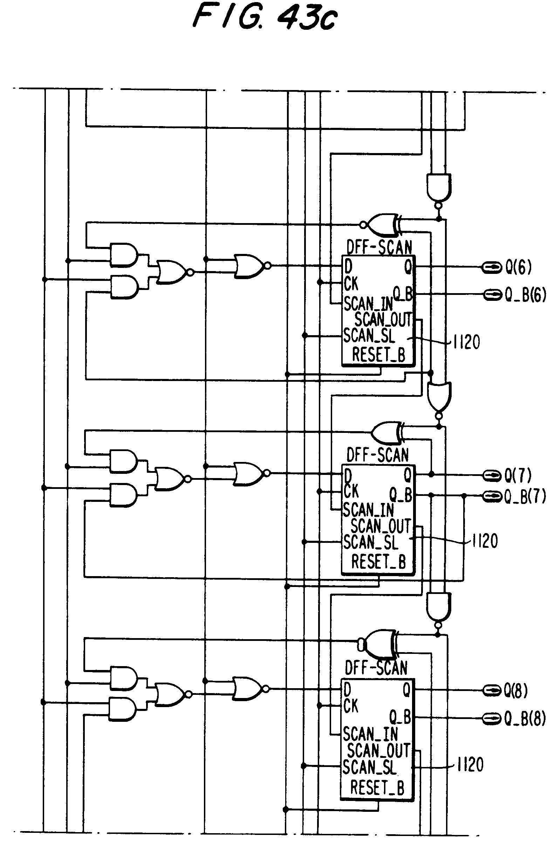

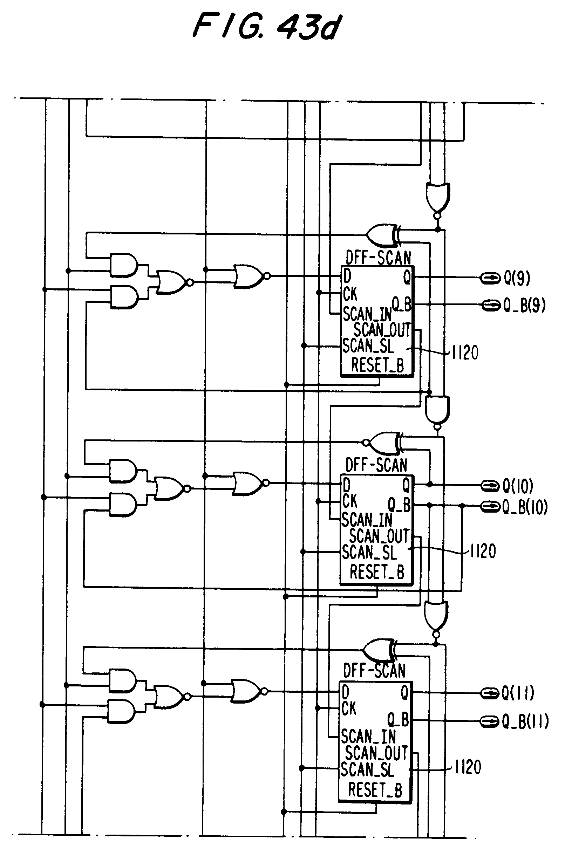

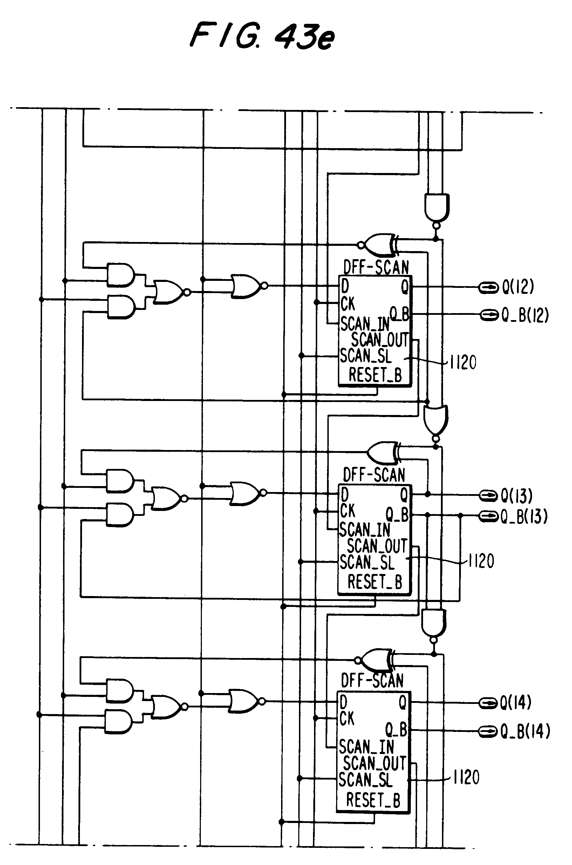

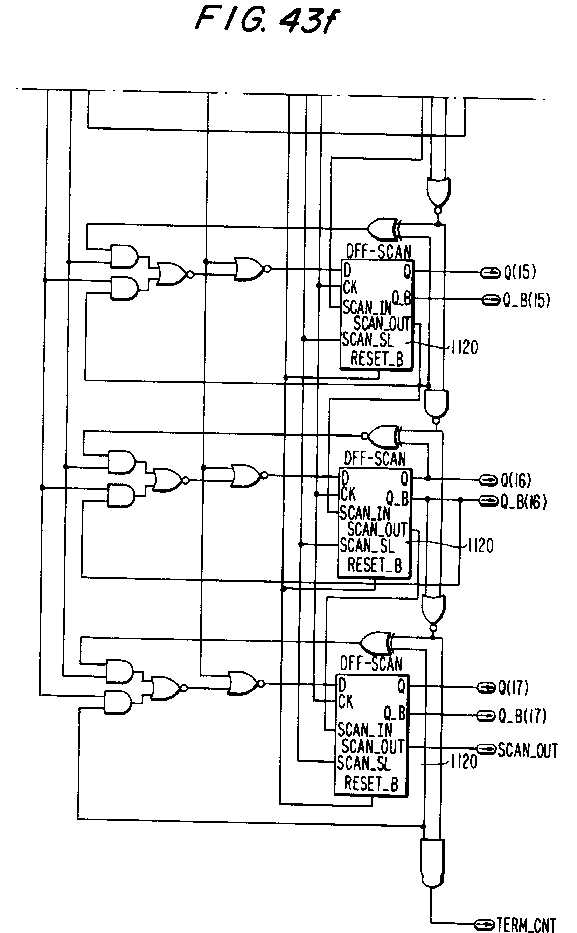

Shared memory controller 10, also provides the capability to monitor motor controller 30 via watchdog unit 250, shown in FIG. 2. A functional block diagram and a state machine diagram for watchdog unit 250 are shown in FIGS. 36 and 37, respectively. Further details of the circuitry in corresponding watchdog module 650, shown in FIG. 6b, are provided in FIGS. 34-43.

Watchdog module 650 is designed to monitor the ALE signal of system controller 40. If 259 clock cycles (21.6 milliseconds for a 12 MHz clock) go by without an ALE pulse the circuit generates a timeout signal to system controller 40. This signal indicates to the system controller 40 that motor controller 30 has been idle and a system error should be given to the user. A reset timer signal is also provided for asynchronous initialization of the time count, and reset of the timeout signal, as shown functionally in FIG. 36.

An 18 bit counter which provides a 259 clock cycle count (21.6 ms for a 12 MHz clock) timeout was implemented. To implement the ALE detect block the state machine depicted in FIG. 37 was used.

Referring to FIGS. 2-6 and 36-43, signals relating to watchdog unit 250 include:

R_TMR - reset for watchdog module timer (input, pins 37). This signal is an asynchronous active high input and it indicates that the counter should enter the reset state, the timeout signal should be removed if asserted, and the watchdog state machine that detects ALE should be initialized to state 0. This signal will be asserted at power up. The global RESET_B signal overrides this reset and also initializes the circuit. When this signal is low it allows counting non-ALE cycles. Both TTL and CMOS levels are accommodated. A weak pulldown device is also connected to this input so as to hold pin 37 low in the absence of an input signal.

TMOUT - indicates a counter terminal count (output, pin 34). This active high output indicates that the ALE watch dog detect counter has reached terminal count. This signal will remain asserted until the R_TMR signal is asserted and clears it. As long as the R_TMR signal is asserted TMOUT will remain low. The TMOUT signal is removed within 3 clock periods of detecting R_TMR and is glitch free, being the output of a flip-flop clocked by SYSCLOCK. High indicates that a timeout has occurred. Low indicates that no timeout has been detected. (TTL level, CMOS driver, 4mA output driver).

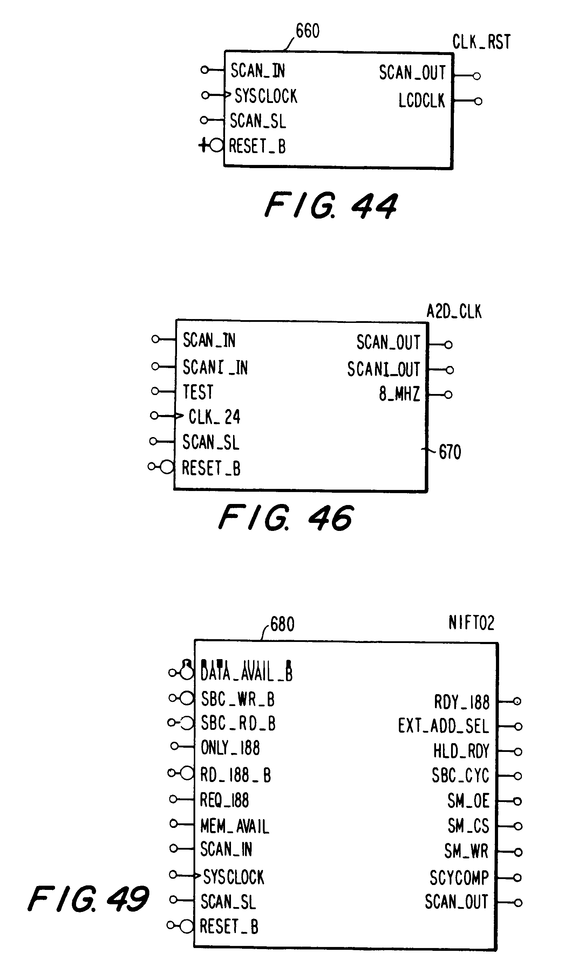

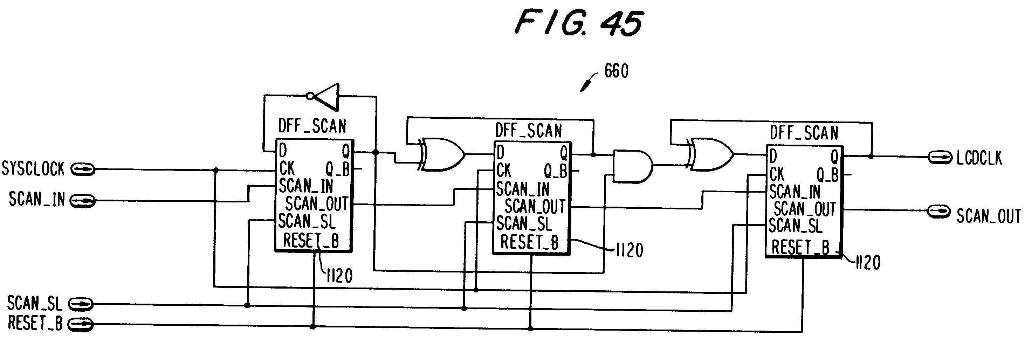

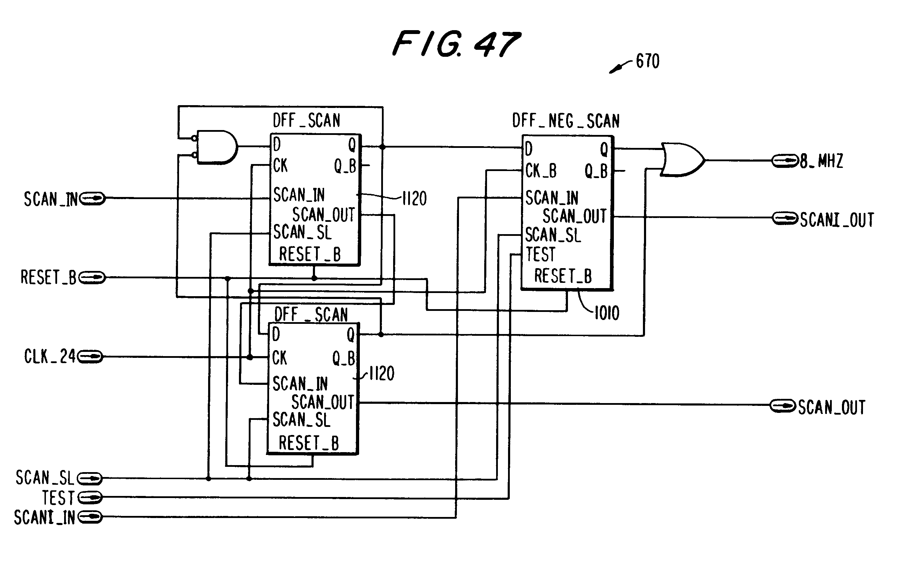

As shown in FIG. 2, shared memory controller 10 contains clock unit 260. Corresponding CLK_RST module 660 and A2D_CLK module 670 are shown in FIG. 6a. Details of the pins and circuits in CLK_RST module 660 and A2D_CLK module 670 are shown in FIGS. 44-47.

Functionally, CLK_RST module 660 generates the LCD_CLK signal from the system clock. The LCD_CLK is a 1.5 MHz signal when the input to pin CLK_24 is a 24 MHz signal. A2D_CLK module 670 generates an 8 MHz signal used by the analog to digital converter externally. The A2D is used as part of the circuitry of sensor bus controller 50.

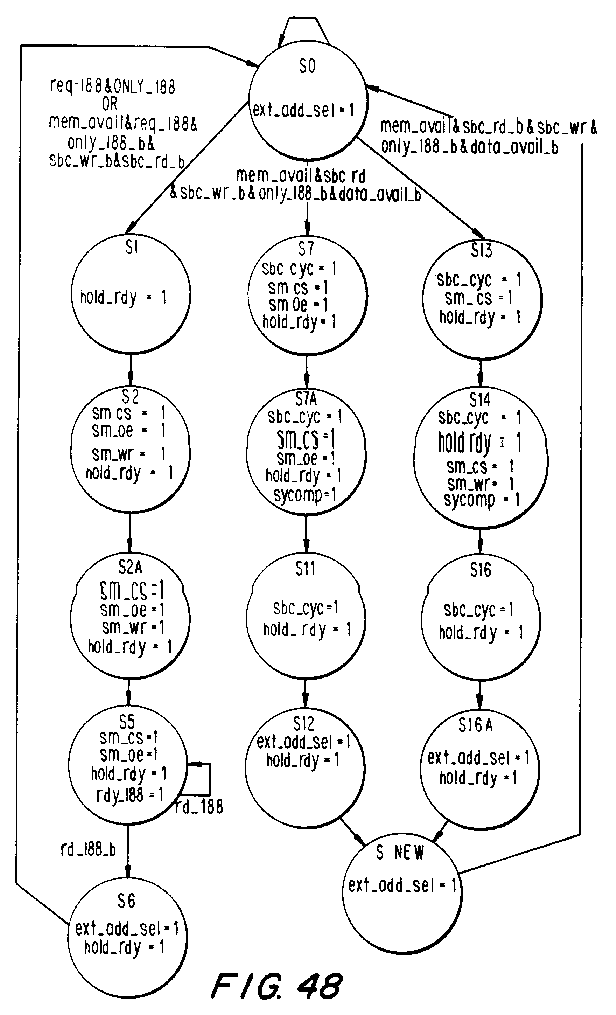

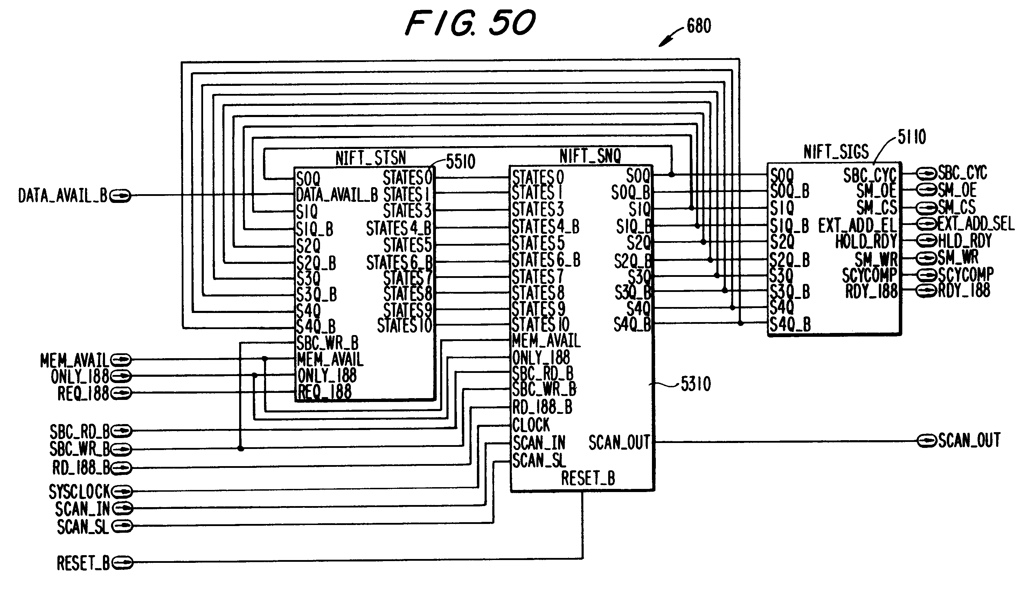

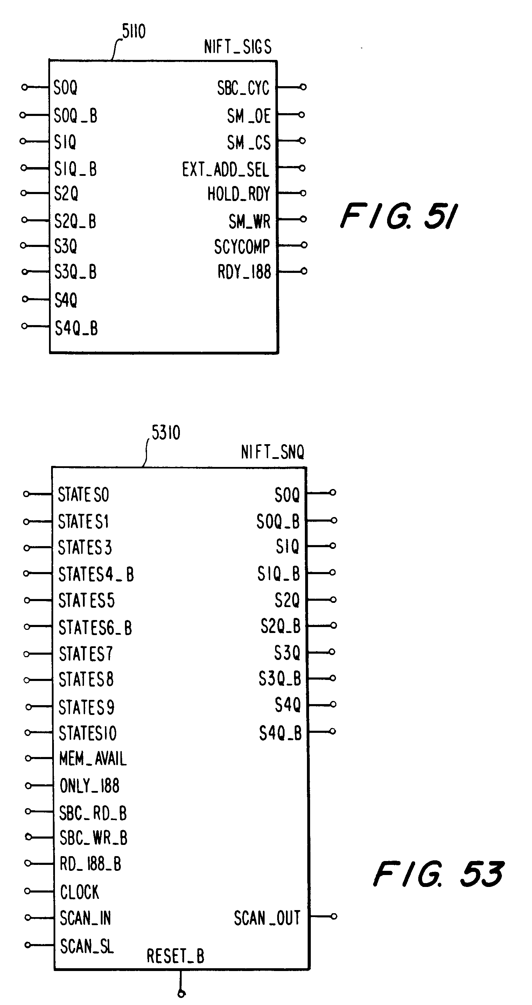

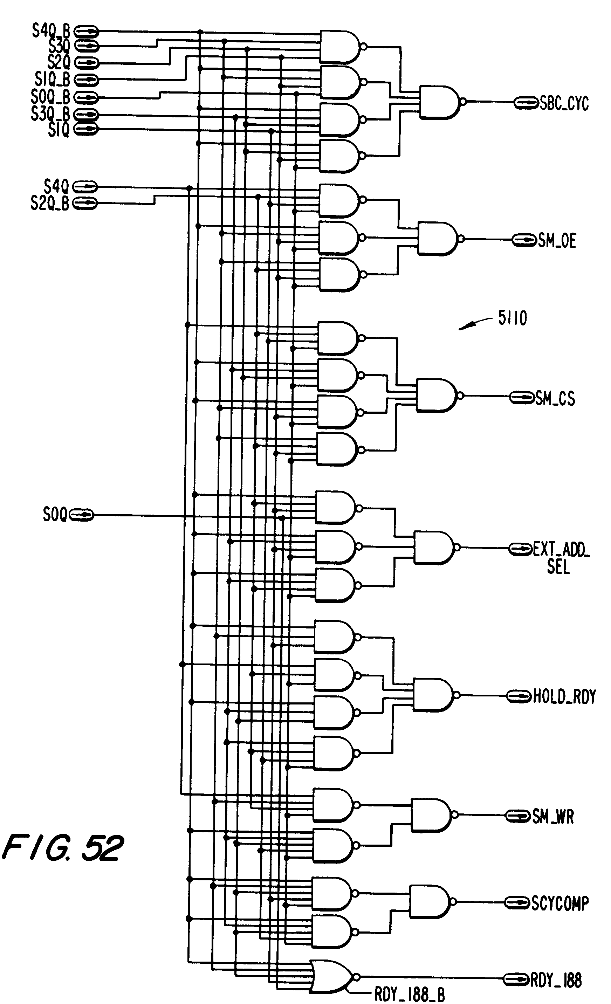

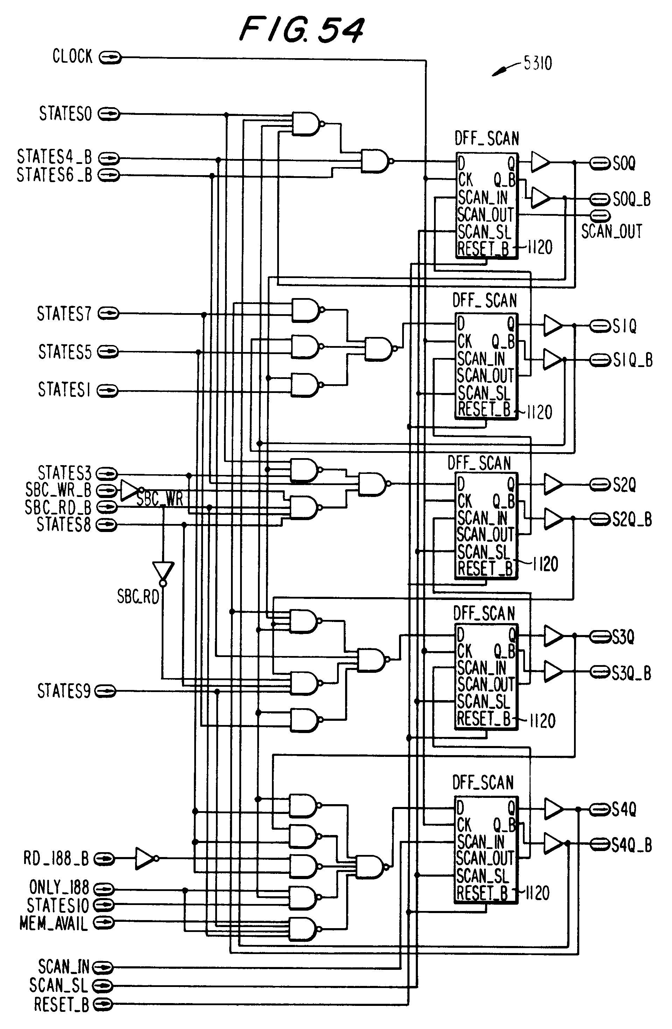

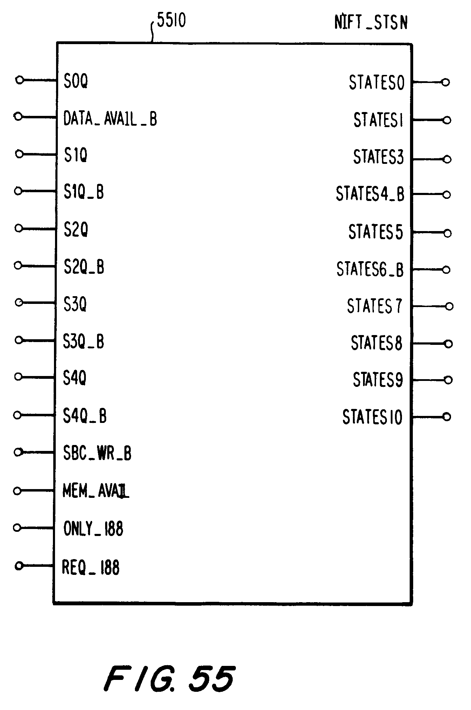

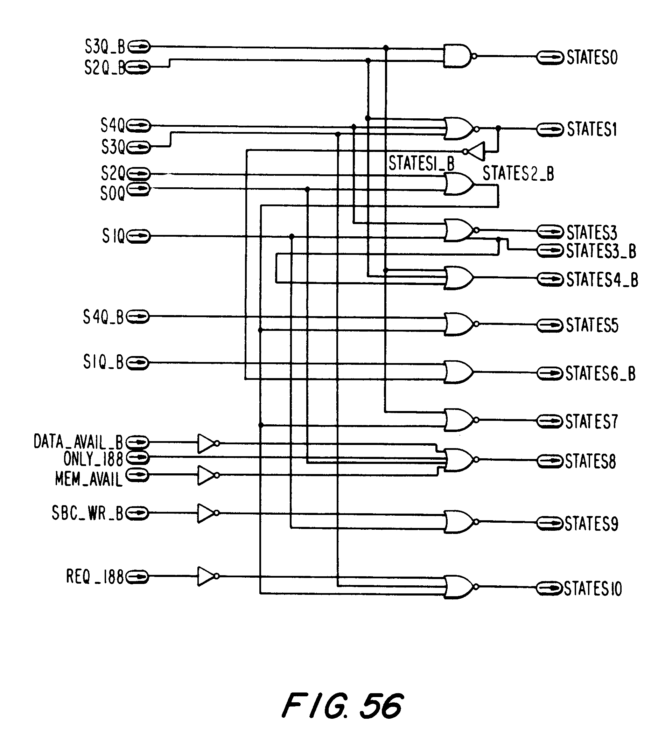

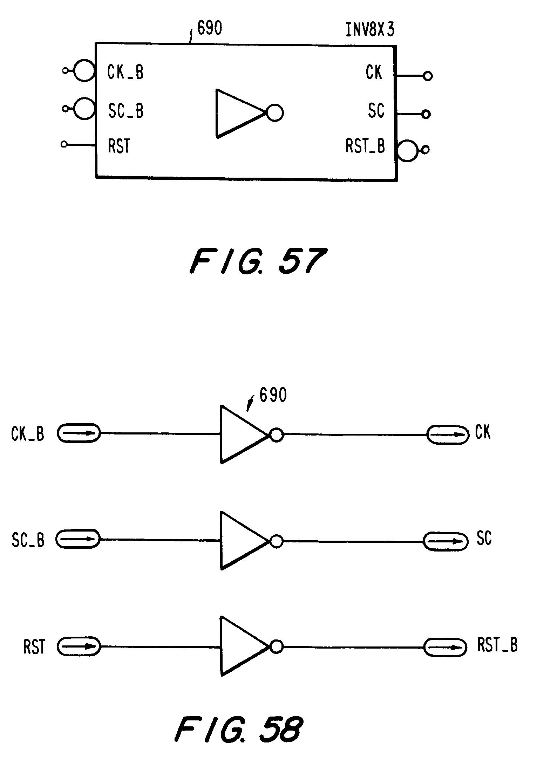

As shown in FIG. 2, shared memory controller 10, contains arbitration unit 200. A state machine diagram of arbitration unit 200 is shown in FIG. 48. The interconnections between corresponding arbitration module 680 and the other modules in shared memory controller 10 are shown in FIGS. 6a-c. Further details of the circuitry of arbitration module 680, including pin diagrams and circuits of the three submodules are shown in FIGS. 49-56. Module INV8X3, used to buffer inter-module signals during fan-out, is shown in FIGS. 57 and 58.

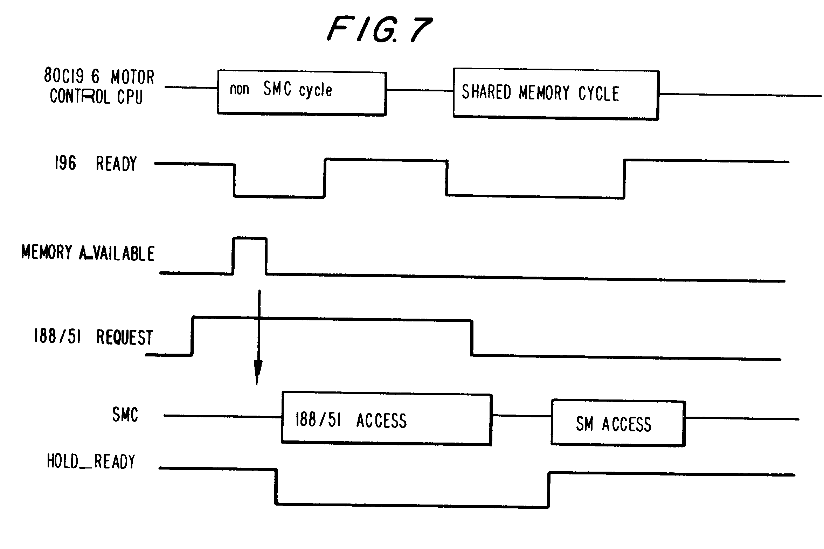

The purpose of arbitration module 680 (module NIFT02) is to grant access to shared memory 20 to the adequate requesting device. The arbiter consists of a synchronized preference arbitration scheme. The asserted edge of the ALE signal of motor controller 30 defines the arbitration decision point. This point is used for arbitrating because the most critical parameter for system performance is the memory access time for motor controller 30. Thus, this processor has first priority to access memory and only during cycles where it is not requesting memory can the other processors proceed with a memory cycle. As shown in FIG. 7, because the memory cycles of the other controllers may extend into the following cycle of motor controller 30, there is a signal (HOLD_RDY, discussed above in reference to the signals relating to motor controller interface 240) that delays the cycle of motor controller 30 should it be to shared memory 20.

In addition to the module discussed above, shared memory controller 10 also includes inverter buffer modules 690, providing increased driving capability during fan-out.

Shared memory circuit 10 incorporates a scan mode feature that provides a testing capability by tying internal registers together.

Signals relating to the scan function include:

SCAN_SL - select line for scan mode (input - pin 32). This input selects the scan test mode when high. In this mode all flip-flops are serially connected forming a shift register. When low shared memory controller 10 is in normal operation. This input is tied to a pull-down cell which keeps the signal low when it is not being driven.

TEST - test mode selector for special cells (input - pin 33). This active high input is used in three cases. The first two are an input to a MUX that selects the system_clock to be the flip-flop clock in scan mode (this is used in the 188_if and 196_if modules). The third case is used in the module MEM_IF to disable an asynchronous logic feedback loop during scan mode, and to use the system_clock to trigger the memory latch in scan mode. This input includes a pull down cell that keeps the pin low when not driven.

SCAN_IN - scan input signal (input - pin 31). This input is the beginning of the scan chain register in scan mode. This input includes a pull down cell that sets it low when the pin is not driven.

SCAN_OUT - scan output signal (output - pin 80). This output is the end of the scan chain register in scan mode.

All flip-flops in shared memory controller 10 are scan cells. The SCAN_SL input sets flip-flops to scan mode when high. An additional TEST signal was necessary for the scan mode in certain circuitry areas. Test is also high in scan mode. The SCAN_IN input is the entry signal of the scan chain and the SCAN_OUT output is the last bit of the chain. The test vectors that use scan were run at 1 MHz and 96% fault coverage was achieved through the automatic test vector generation AIDA tool. The transparent address latch in the SBC_IF module was left out of the scan chain.

Although particular attention has been given to the implementation of the shared memory controller in an application specific integrated circuit, it will be understood that the overall function of the chip is, in part, to arbitrate and control access to shared memory between multiple processors, and that among other possible variations within the scope of the invention that will occur to those skillful in the art, the circuit could have been implemented using a circuit board and commercially available integrated circuits as well.

Thus it is seen that for an article processing system, a low cost circuit is provided that provides for efficient processor-to-processor communication via shared memory by interfacing with the processors and arbitrating memory access priorities. One skilled in the art will appreciate that the present invention can be practiced by other than the described embodiments, which are presented for purposes of illustration and not of limitation, and the present invention is limited only by the claims which follow.

## Claims

1. A shared memory controller circuit for providing control for processor-to-processor communication In a multiple processor system having shared volatile memory, a first processor for providing real-time control of a first subsystem, a second processor having lower priority access to said shared volatile memory than said first processor, and a third processor having lower priority access to said shared volatile memory than said first processor, the controller circuit comprising:
arbitration means for determining access priorities to said shared volatile memory;
first processor interface means, for allowing communication between said arbitration means and said first processor;
second processor interface means, for allowing communication between said arbitration means and said second processor;
third processor means for allowing communication between said arbitration means and said third processor; and
a memory control unit.

2. The circuit of claim 1 wherein at least one of said first processor, said second processor, and said third processor is microprocessor-based.

3. The circuit of claim 1 or 2 wherein said circuit is an integrated circuit.

4. The circuit of any preceding claim wherein said arbitration means allows said first processor to access said shared volatile memory asynchronously.

5. The circuit of claim 4 wherein said arbitration means allows said second processor and said third processor to access said shared volatile memory only when said first processor begins a task other than that of communicating with said shared volatile memory.

6. The circuit of claim 5 wherein said arbitration means communicates a hold signal to said first processor when one of (a) said third processor or (b) said second processor, is accessing said shared volatile memory, said hold signal preventing said first processor from attempting to access said shared volatile memory.

7. The circuit of any preceding claim wherein said first subsystem is a motion control subsystem, said first processor is a motion controller, and said first processor interface means comprises means for motion controller interfacing.

8. The circuit of claim 7 wherein said first processor interface means further comprises means for generating a synchronous signal to allow said third processor and said second processor access to said shared volatile memory.

9. The circuit of any preceding claim wherein said third processor is a system controller and said third processor interface means comprises means for system controller interfacing.

10. The circuit of claim 9 wherein said third processor interface means further comprises means for providing synchronous memory request processing and data-ready control.

11. The circuit of claim 10 wherein said third processor Interface means further comprises mode selection means for selecting between:
(a) a first mode wherein said first processor has first priority to access said shared volatile memory, said second processor has second priority to access said shared volatile memory, and said third processor has third priority to access said shared volatile memory; and
(b) a second mode wherein said first processor is not operational, said second processor has first priority to access said shared volatile memory, and said third processor has second priority to access said shared volatile memory.

12. The circuit of any preceding claim wherein said second processor is a sensor bus controller and said second processor interface means comprises means for sensor bus controller interfacing.

13. The circuit of claim 12 wherein said second processor interface means further comprises shared memory access control means, memory storage means, address decoding means, and memory status means.

14. The circuit of claim 13 further comprising:
means for receiving address signals, corresponding to an address in said shared volatile memory, from said second processor;
means for receiving data signals from said second processor;
means for communicating said data signals to said shared volatile memory at said address; and
means for communicating a cleared data-available signal to said second processor, said cleared data-available signal indicating that said data signals have been stored in said memory storage means.

15. The circuit of claim 13 further comprising:
means for receiving address signals, corresponding to an address in said shared volatile memory means, from said second processor means;
means for communicating data signals, corresponding to data stored in said shared volatile memory at said address, from said shared volatile memory to said memory storage means;
means for communicating a cleared data-available signal to said second processor, said cleared data-available signal indicating that said data signals have been stored in said memory storage means; and
means for communicating said data signals from said memory storage means to said second processor.

16. The integrated circuit of any preceding claim further comprising means for monitoring said third processor, said monitoring means communicating an interrupt signal to said third processor if a predetermined time interval passes without said third processor communicating a predetermined signal to said monitoring means.

17. The integrated circuit of claim 16 wherein said monitoring means comprises means for receiving a reset signal for asynchronous initialization of said time count.

18. The integrated circuit of any preceding claim further comprising clock unit means for communicating with a system clock signal, said clock unit means cooperating with said system clock signal to generate at least one lower frequency signal.

19. The integrated circuit of any preceding claim wherein said memory control unit further comprises:
means for creating strobes and control signals for communication with said shared volatile memory;
output enable means for communication of enable signals with shared memory address multiplexer means and with data buffer means; and
multiplexer control means for communication with said shared memory address multiplexer means.

20. A shared memory controller integrated circuit for providing control for microprocessor-to-microprocessor communication in a multiple microprocessor system with a microprocessor-based motor controller, a microprocessor-based sensor bus controller, a microprocessor-based system controller, and shared volatile memory comprising:
arbitration means for determining access priorities to said shared volatile memory;
motion controller interface means, for allowing communication between said arbitration means and said motion controller;
sensor bus controller interface means, for allowing communication between said arbitration means and said sensor bus controller; and
system interface means for allowing communication between said arbitration means and said system controller;
wherein said arbitration means comprises:
means for said motion controller to access said shared volatile memory asynchronously;
means for said sensor bus controller and said system controller to access said shared volatile memory only when said motion controller begins a task other than that of communicating with said shared volatile memory; and
means for communicating a hold signal to said motion controller when said system controller or said sensor bus controller is accessing said shared volatile memory, said hold signal preventing said motion controller from attempting to access said shared volatile memory.

21. The integrated circuit of claim 20 wherein said motion controller interface means comprises means for generating a synchronous signal to allow said system controller and said sensor bus controller access to said shared volatile memory.

22. The integrated circuit of claim 21 wherein said system interface means comprises means for providing synchronous memory request processing and data-ready control.

23. The integrated circuit of claim 22 wherein said system interface means comprises mode selection means, said mode selection means selecting between:
(a) an arbitration mode wherein said motion controller has first priority to access said shared volatile memory, said sensor bus controller has second priority to access said shared volatile memory, and said system controller has third priority to access said shared volatile memory; and
(b) a system controller mode wherein said motion controller is not operational, said sensor bus controller has first priority to access said shared volatile memory, and said system controller has second priority to access said shared volatile memory.

24. The integrated circuit of claim 23 wherein said sensor bus controller interface means comprises shared memory access control means, memory storage means, address decoding means, and memory status means.

25. The integrated circuit of claim 24 further comprising:
means for receiving address signals corresponding to an address in said shared volatile memory from said sensor bus controller;
means for receiving data signals from said sensor bus controller;
means for communicating said data signals to said shared volatile memory at said address; and
means for communicating a cleared data-available signal to said sensor bus controller, said cleared data-available signal Indicating that said data signals have been stored In said memory storage means.

26. The integrated circuit of claim 24 further comprising:
means for receiving address signals corresponding to an address in said shared volatile memory means from said sensor bus controller means;
means for communicating data signals corresponding to data stored in said shared volatile memory at said address from said shared volatile memory to said memory storage means;
means for communicating a cleared data-available signal to said sensor bus controller, said cleared data-available signal indicating that said data signals have been stored in said memory storage means; and
means for communicating said data signals from said memory storage means to said sensor bus controller.

27. The integrated circuit of claim 23 further comprising means for monitoring said system controller, said monitoring means communicating an interrupt signal to said system controller if a predetermined time interval passes without said system controller communicating a predetermined signal to said monitoring means.

28. The integrated circuit of claim 27 wherein said monitoring means comprises means for receiving a reset signal for asynchronous initialization of said time count.

29. The integrated circuit of claim 23 further comprising clock unit means for communicating with a system clock signal, said clock unit means cooperating with said system clock signal to generate at least one lower frequency signal.

30. The integrated circuit of claim 23 comprising memory interface means, said memory interface means comprising:
means for creating strobes and control signals for communication with said shared volatile memory;
output enable means for communication of enable signals with shared memory address multiplexer means and with data buffer means; and
multiplexer control means for communication with said shared memory address multiplexer means.

31. A multiple processor system comprising:
a shared memory controller circuit according to any preceding claim;
a shared volatile memory;
a first processor interfaced to said controller circuit for real-time control of a first subsystem;
a second processor interfaced to said controller circuit and having lower priority access to said shared volatile memory than said first processor; and
a third processor interfaced to said controller circuit and having lower priority access to said shared volatile memory than said first processor.

32. A method for controlling processor-to-processor communication in a multiple processor system having shared volatile memory, a first processor for providing real-time control of a first subsystem, a second processor having lower priority access to said shared volatile memory than said first processor, and a third processor having lower priority access to said shared volatile memory than said first processor, the method comprising:
allowing communication between an arbitration means and said first processor;
allowing communication between said arbitration means and said second processor;
allowing communication between said arbitration means and said third processor; and
using said arbitration means for determining access priorities to said shared volatile memory.

33. A mailing machine comprising a shared memory circuit according to any of claims 1 to 30 or a multiple processor system according to claim 31.

34. A mailing machine operable in accordance with the method of claim 32.
